# EUROPEAN PATENT SPECIFICATION

(11) **EP 3 884 914 B1**
(45) Date of publication and mention of the grant of the patent: **21.05.2025**
(21) Application number: 21168108.5
(22) Date of filing: 09.09.2014
(51) Int. Cl.: B29C 45/14, A61F 6/14, B29C 45/26, B29C 33/30, B29C 45/72, B29C 45/73, B29K 83/00, B29C 45/64, B29C 45/00, B29K 105/00, B29L 31/00

(54) **AN OVERMOULDABLE SUBSTRATE AND USES THEREOF**
UMSPRITZBARES SUBSTRAT UND DESSEN VERWENDUNGEN
SUBSTRAT SURMOULABLE ET SES UTILISATIONS

(43) Date of publication of application: 29.09.2021
(62) Divisional of application: 14766137.5
(73) Proprietor: Qpharma AB, 21215 Malmö (SE)
(72) Inventor: Kendrup, John Ingvar Feldtblad, 25454 Helsingborg (SE); Stavnshøj, Steen Alex, 27237 Simrishamn (SE)
(74) Representative: Holme Patent A/S

(56) References cited:
- EP-A1- 0 816 242
- WO-A1-91/07934
- FR-A1- 2 806 343
- SPAMER P ET AL: "FLEXIBLES FERTIGUNGSZENTRUM FUER DAS SPRITZGIESSEN KLEINER SERIEN", KUNSTSTOFFE, CARL HANSER VERLAG, MUNCHEN, DE, vol. 74, no. 9, 1 September 1984 (1984-09-01), pages 489/490, XP001173721, ISSN: 0023-5563

## Description

The present invention relates to manufacturing overmoulded medical devices, such as intrauterine devices with a medicament reservoir.

The manufacturing process of intrauterine devices commonly consists of separate manufacturing of a main polymeric body and subsequently pulling, manually or more or less automated, a medicament reservoir over at least a part of this main body. A typical main body is T-shaped and the medicament reservoir is a medicament-containing sheath or tube with an elongated channel. The medicament-containing sheath or tube is positioned at the stem of the T-shaped main polymeric body for release of e.g. contraceptive medicaments or in hormone replacement therapy once positioned inside uterus. The tube may e.g. be cut to required length, e.g. from a longer tube, whereby the free ends of the cut-off tube gets undesired sharp edges resulting from the cutting process. Contraceptive medicaments are e.g. hormones, however intrauterine device are not only used as contraceptives, but can also be used for treatment of e.g. heavy menorrhagia or dysmenorrhea, endometriosis, adenomyosis and anemia, and can include other kinds of medicaments or combinations of several medicaments.

Thus there is a need for intrauterine devices (IUDs) that are comfortable, easily manufactured, easily inserted in uterus, and suited to be accommodated inside uterus without causing inconveniences to the women.

It is known from European Patent no. EP1539063B1 to injection mould the main body of an intrauterine devices in a first injection moulding step, either as a separate item or on a core such as a copper wire, and provide the medicament reservoir on the main body in a subsequent injection moulding step. The importance of providing the main body in correct position prior to and after application of the medicament reservoir is realised in EP1539063B1, and to this aspect EP1539063B1 simply provides the obvious means to confine the medicament reservoir between opposite locking parts on the stem of a T-shaped member, which locking parts simply are enlarged radius sections provided in spaced apart axial distance on the stem part. This known method of manufacturing intrauterine contraceptive devices is not cost-efficient because only one device can be manufactured at a time and considerable time needs to elapse between process steps in order for the main body to cure sufficient to subsequently apply the medicament reservoir, which medicament reservoir needs to be treated with care and cure slowly under controlled conditions in order not to negatively effect medicament properties. So as a consequence, devices resulting from this known process become expensive. Moreover, as time elapses and the medicament reservoir deterioates, displaces or change shape during medicament release the edges of the parts of the enlarged radius sections of the T-shaped member may become exposed, which could harm the uterus and induce tissue injuries.

FR2806343A1 discloses a substrate according to the preamble of claim 1.

In a main aspect of the present invention is provided multiple intrauterine devices faster and cheaper than hitherto possible. In a further aspect of the present invention is manufactured intrauterine devices with reduced manual handling.

It is a further aspect of the present invention to provide a medicament reservoir on an intrauterine device without manual manipulation of the medicament reservoir.

It is a further aspect of the present invention to provide an intrauterine device with a medicament reservoir so that transitions between the main body of the intrauterine device and the medicament reservoir are smooth without any exposed edges after onset of medicament release.

It is a further aspect of the present invention to apply a medicament reservoir on an intrauterine device in an injection moulding process.

The novel and unique whereby these and other aspects are achieved according to the present invention consists in a substrate of individual blank objects as defined in claim 1.

An insertable mould assembly is designed for overmoulding the substrate of a first component material, which substrate is made in another separate process.

Within the context of the present invention the term "overmoulding" means an overmoulding method where a pre-moulded substrate of a first component material is placed into a mould, the "insert mould" or "insertable mould assembly", and an overmoulding second component material is shot directly over and/or around the substrate to overmould it as the shape and volume of the at least one overmould cavity dictates. So "overmoulding" within the present context is the process in which one or more component materials, such as polymeric materials, are injection moulded around, or on, one or more substrates, and the "insert mould" or "insertable mould assembly" is the unit inside which the substrate is placed and confined to receive the overmoulding shot of second component material. Within the context of the present invention the "insert mould" consists of the first mould part and the second mould part, which first mould part and second mould part are the forming parts of the insert mould. As a minimum the "mould assembly" or "insertable mould assembly" includes the insert mould. The substrates to be overmoulded may consist of a variety of materials, including polymeric, metallic and metal materials, in different shapes and dimensions. Thus the substrate need not be of a polymeric material, and it can be made in other separate manufacturing processes, e.g. metal casting and metal forming, or be premade in another injection moulding process unrelated to the overmoulding process. So the substrates can be stock goods.

The first mould part and the second mould part can conveniently be mounted to each other to confine the substrate, thereby making the insertable mould assembly an integral insertable and mechanical processable unit for the injection moulding machine. The substrate can be transported inside the closed insertable mould assembly, and be processed, overmoulded and post-treated while confined in the insert mould between the first mould part and the second mould part. Many insertable mould assemblies can be prepared for the injection moulding machine at a remote location, and be made ready for overmoulding of a confined substrate in advance, as well as the insertable mould assembly can be taken out of the injection moulding machine as and integral unit e.g. for curing of the overmould component at another location. So valuable processing time for up-front handling of the substrate and subsequent curing can take place outside the injection moulding machine. Because the insertable mould assembly is handled as an integral unit a second component of another material than the first component material can be overmoulded onto the substrate during the injection moulding. After overmoulding the substrate is not touched by hand or ejector pins, so no marks or contaminations happen. The overmoulded substrate is left untouched in the insertable mould assembly to cure until complete curing has been reached. Eventually the insertable mould assembly can be reused, and normally it is. A delicate and careful treatment that does not affect neither the shape of the substrate, not negatively affects the chemical and physical properties of any of the substrate and its overmould is provided.

Male mounting parts and/or female mounting parts of the substrate may expediently be provided to be located in female mounting parts and/or male mounting parts, respectively, of any of the first mould cavity face and the second mould cavity face to serve as a convenient, easy accessible, mounting tool to make sure that the substrate is always positioned correct for the subsequent overmoulding process. The male mounting part and/or female mounting part on the substrate can be manufactured or provided intentionally in the other separate process or can be residues from this forming process, which residues intentionally is left on the substrate with the purpose of serving as a male/female mounting part. So the male/female mounting parts can be integral parts of the substrate.

The male mounting parts and female mounting parts of the substrate and the mould parts can be designed to be complementary, e.g. to function as a key in a keyhole. In such a configuration there is only one option for positioning e.g. an asymmetrical insert in the insertable mould assembly. This option is useful to trace moulding errors. On the other hand, for a symmetrical insert, it may not be critical that the substrate is rotated a certain angle about a centre mount. Such inserts can have several identical male mounting parts to be positioned in several identical, although complementarily shaped, female mounting parts. Both ways ensure an important predetermined overmoulding position of the substrate in relation to the at least one overmould cavity. The male/female mounting parts of the mould parts can be integral with the mould part or be detachable, such as separate locating pins passing through, optionally anchoring in, holes in the mould part.

The insertable mould assembly is designed to be insertable in the injection moulding machine in an assembled state of the insert mould, thus in assembled state of the first mould part and the second mould part. So the substrate can easily be placed in the insertable mould assembly outside the injection moulding machine, the first mould part and the second mould part are then closed, whereafter the insertable mould assembly is placed and mounted to the injection moulding machine. The insertable mould assembly can be made ready in advance and a suitable number of insertable mould assemblies be available for the injection moulding process to speed up manufacturing of overmoulded substrates. A minimum number of available mould assemblies may be the number that makes it possible to have a new prepared, closed insertable mould assembly ready once the injection moulding machine opens.

To facilitate mounting of the insertable mould assembly to the injection moulding machine the first mould part may have a first free mould face opposite the first mould cavity face, so that a first exterior annular wall is defined between the first free mould face and the first mould cavity face. In a similar manner the second mould part may have a second free mould face opposite the second mould cavity face, so that a second exterior annular wall is defined between the second free mould face and the second cavity face. On the one hand these exterior annular walls confer an axial length and thickness to the first and second mould parts of the insertable mould assembly to make sufficient goods available to cut out the at least one overmould cavity and any female mounting parts, and on the other hand the axial length of the combined mould parts of the insert mould makes it easy to handle the insertable mould assembly, including to mount and demount the insertable mould assembly in an associated injection moulding tool of the injection moulding machine.

The insertable mould assembly may comprise at least one alignment means adapted to arrange the first mould part and the second mould part in the overmoulding position so that any opposite portions of the at least one overmould cavity of the respective first mould part and the second mould part can be positioned properly in relation to each other, thus so that any/all overmould cavities become closed and surround exactly the part, area or section of the substrate that is to be overmoulded when the insertable mould assembly is closed around the substrate.

The alignment means may also serve as a convenient means to align external structural features provided on the first exterior annular wall and the second exterior annular wall, which external structural features e.g. may be provided to appropriately mount the closed insertable mould assembly in an associated injection moulding tool of an injection moulding machine.

In a preferred embodiment the at least one alignment means may comprise at least a first alignment member associated with the first exterior annular wall and a second alignment member associated with the second exterior annular wall.

The insertable mould assembly can have at least one clamping mechanism to interlock the first mould part and the second mould part in the overmoulding position to confer to the insertable mould assembly the ability to withstand the injection conditions without the insertable mould assembly unintentional starts to open and leak. A further advantage is that the closed, clamped together insertable mould assembly can be taken out of the injection moulding machine as a separate integral unit to be manipulated, handled and subjected to further processing and post-treatment at another location, tool or machine, prior to fully removal of the now overmoulded substrate from the insertable mould assembly, if such post-treatment is needed.

In a preferred embodiment of the insertable mould assembly the at least one clamping mechanism may comprise a latch mechanism of which a first latch member is secured to the first exterior annular wall and a second latch member is secured to the second exterior annular wall. Preferably, the at least one clamping mechanism is located in external features of the exterior annular walls, such as in aligned recesses of the first exterior annular wall and of the second exterior annular wall, so that the at least one clamping mechanism does not protrude substantially from the annular circumference of the insertable mould assembly. The clamping mechanism facilitates easy and fast opening of the insertable mould assembly, e.g. by disengaging the first latch member and the second latch member after termination of the overmoulding process, or after any selected, predetermined regimes of post-treatment actions and operations, such as tempering and curing, or fast locking of the insertable mould assembly by engaging the first latch member and the second latch member after a new substrate has been placed between the first mould part and the second mould part.

In an expedient embodiment of the insertable mould assembly the at least one clamping mechanism can further comprise a spring mechanism provided to act between the first mould part and the second mould part, wherein the spring mechanism may include a spring member which is compressed when the insertable mould assembly is being closed, and is released to actuate an initial parting of the first mould part and the second mould part when the at least one clamping mechanism is released. In this expedient embodiment the first mould part and the second mould part are held together in a closed condition of the insertable mould assembly against a spring force of a spring member, which spring member, as soon as it is sets free upon opening of the closed insertable mould assembly, will return to a non-biased condition. So the integral spring mechanism will inherently contribute to the initial parting of the first mould part and the second mould part in the opening process of the insertable mould assembly, as soon as the at least one clamping mechanism is released.

To make sure that the first mould part and the second mould part of the insertable mould assembly are able to be properly aligned and firmly clamped together during at least the overmoulding process, and during any post-treatment or required processing outside the injection moulding machine, the insertable mould assembly may have at least two clamping mechanisms and at least two alignment means, preferably the two clamping mechanisms are located diametrically opposite each other, as well as the two alignment means are located diametrically opposite each other. Optionally an alignment means is provided alternate with a clamping mechanism along the circumference of the insertable mould assembly.

Clamping mechanisms and alignment means may conveniently have different size and shape to eliminate improper assembling, in other words, to secure correct assembling of the first mould part and the second mould part. More than two alignment means and two clamping mechanisms are foreseen within the scope of the present invention, which could be appropriate to further make sure that the substrate does not displaces or falls out during handling and manipulation of the closed insertable mould assembly.

The first exterior annular wall of the first mould part may be configured to be received at least partly in a fixed position in a first tool cavity of a first support plate of an injection moulding tool with the first free mould face facing said first tool cavity. In a similar manner the second exterior annular wall of the second mould part may be configured to be received at least partly in a fixed position in a second tool cavity of a second support plate of an injection moulding tool with the second free mould face facing said second tool cavity. The second support plate is aligned with the first support plate to clamp in-between them the closed, substrate-containing insertable mould assembly during the injection of the overmoulding second component material. The closed insertable mould assembly can be nested in any of the first or second tool cavities prior to injection as is most convenient, although it is preferred to mount the closed insertable mould assembly to the stationary section of the injection moulding machine, such as e.g. the lower section of a vertical injection moulding machine. The first and second tool cavities also serve to prevent the closed insertable mould assembly mould from rotating about its centre axis, thus to keep it in fixed, predetermined position, to make sure that e.g. an injection nozzle inlet and gate(s) of the insertable mould assembly are in the correct position towards the injection nozzle(s) of the injection moulding machine. So the external structural features provided on the first exterior annular wall and on the second exterior annular wall of the insertable mould assembly mate with complementarily shaped internal features provided in the exterior annular walls of the first and second tool cavities of the respective support plates to exclude all options for arranging the insertable mould assembly wrongly in said tool cavities.

In an advantageous embodiment the male mounting parts of the substrate to be received in the female mounting parts of the insertable mould assembly can be one or more sprues originating from the manufacturing of the substrate in the other, separate process. The sprues are residues from the separate manufacturing of the substrate, and such sprues are normally cut off because they do not form part of the design of the final object, and normally the sprues have no subsequent function. Quite contrary to the normal perception of the presence of sprues on a moulded object that has been taken out of the mould, the inventors of the present invention has realized that these sprues can, although they need not, advantageously be utilized as male mounting parts to be placed in the female mounting parts of any of the first mould part and/or the second mould part. The reverse situation where female mounting parts deliberately are manufactured on the substrate is also possible within the scope of the present invention. Such deliberately manufactured female mounting parts should not be a part of the final product. They must be removed later, but serve the temporary purpose as temporary means for securing to mating male mounting parts on any of the first mould part and the second mould part. Male or female mounting parts of a substrate may also be other parts of the final object that are not overmoulded, such as parts forming part of the final product.

Male mounting parts may in all embodiments also include more or less of the runners extending from the sprues.

In one embodiment each overmould cavity of the at least one overmould cavity has an inlet gate, which via an inlet sprue cavity is in fluid communication with an injection unit of the injection moulding machine for supplying an overmoulding second component material. Optionally, each overmould cavity has an inlet sprue cavity upstream the overmould cavity and/or an outlet sprue cavity downstream the overmould cavity, seen in the flow direction of the overmoulding second component material.

The overmoulding second component material contains a medicament to provide a medicament reservoir on the substrate by filling the at least one overmould cavity with such enriched overmoulding second component material. Such medicaments must be handled carefully in order not to loose therapeutic activity during the injection moulding process. The precise dosage of medicament in a medicament reservoir is highly important, which implicates controlling the application of the precise amount of overmoulding second component material on the substrate.

The inlet sprue cavities and the outlet sprue cavities may contribute in ensuring complete filling of the at least one overmould cavity, and in ensuring that overmoulding second component material is provided in the correct position on the substrate so that the medicament reservoir or other overmould object resulting from the overmoulding second component material does not accidentally drop off during subsequent manipulation of the substrate, and so that the final objects, e.g. a plurality of identical objects such as identical IUDs, later to be obtained from the overmoulded substrate are free of sharp edges and corners.

In one embodiment of the insertable mould assembly the first mould part can be the part of the insertable mould assembly, which is adapted for being fixed to a moveable or stationary section of the injection moulding machine, e.g. directly or indirectly via the first support plate, and the second mould part be adapted for injection of the overmoulding second component material via the stationary or moveable section of the injection moulding machine, either directly or indirectly via the second support plate. Extra insulation plates, plates for distribution of thermal energy, either by way of lowering or raising the temperature of parts, areas or sections of the injection moulding machine, mounting plates, etc. may be incorporated to any extents deemed necessary and appropriate, and be inserted at any position that improves or promotes the injection overmoulding process, including in order to control that the physical and mechanical properties of the substrate are not destroyed during the stay and overmoulding of the substrate when inside the insertable mould assembly.

Any of the first mould part or the second mould part may have one or more ejector holes extending from its free face an axial distance inside the respective mould part, which ejector holes are dimensioned and serve to receive ejector rods of an ejector unit of the injection moulding machine to help getting the closed insertable mould assembly free of its respective support plate. An ejector unit may be included, however when the insertable mould assembly is removed from the injection moulding tool by hand, or more preferably automatically by e.g. a robot, an ejector unit is not a specific requirement.

The injection moulding process is facilitated by the second mould part having at least one axially extending injection nozzle passageway, inside which a nozzle of the injection unit of the injection moulding machine can reciprocate. The injection nozzle passageways can beneficially also have a circumferential seal, that serves to prevent backflow of the overmoulding second component material in response to the injection pressure exerted by the insertable mould assembly, thus in response to injection of overmoulding second component material, as well as to prevent leakage of the overmoulding second component material into the interface between a support plate and an opposite insertable mould assembly part mounted to said support plate.

In a preferred embodiment the second mould part has a number of axially extending injection nozzle passageways corresponding to the number of overmould cavities. This way each overmould cavity gets a nozzle passageway of its own. Each overmould cavity is put in communication with its own dedicated injection nozzle of the injection unit by the dedicated injection nozzles been located inside dedicated injection nozzle passageways that allow the dedicated injection nozzles to communicate with a respective inlet gate of an overmould cavity, directly, and/or via runners and/or sprues.

Distribution of overmoulding second component material can be done fast, evenly and homogeneously, and premature curing can be avoided. The arrangement of dedicated nozzles for the at least one overmould cavity also facilitates fast, completely filling of all overmould cavities to same extent, so that the risk of product deviations is minimal and acceptable for the later end purpose of the resulting overmoulded product.

The insertable mould assembly advantageously comprises a number of annularly spaced apart overmould cavities for receiving a corresponding number of parts and/or areas of the substrate to be overmoulded. The mating male mounting parts and female mounting parts are the tools or means that provide for the proper orientation of the substrate in relation to the at least one overmould cavity. Emphasis is made that the at least one overmould cavity may have a smaller extent than the substrate so that just selected part(s) of the substrate will become overmoulded. So the overmoulding process may in some embodiment only apply an overmould to part(s) of the substrate, not to the complete substrate. The first mould part and the second mould part are held forcibly together by the injection moulding machine with a force sufficiently high in order that the first mould cavity face and the second mould cavity face close the at least one overmould cavity when the first mould part and the second mould part are brought together by the actuation means of the injection moulding machine. So in the closed condition of the insertable mould assembly the first mould cavity face and the second mould cavity face are in intimate contact to delimit the at least one closed overmould cavities and any sprue cavities for sprues in conjunction with these at least one overmould cavity. The sprue cavities may serve as relieves that take up surplus of overmoulding second component material injected in the at least one overmould cavity, to make entirely sure that precisely the desired and intended amount of overmoulding second component material is selected and apportioned to the selected part(s) of the substrate. The overmoulding second component material is placed on the substrate, e.g. as a medicament reservoir, and the substrate does not overlap sprue cavities.

In one embodiment the insertable mould assembly may have a number of eight annularly spaced apart overmould cavities, preferably with associated sprue cavities.

The substrate can e.g. be a structure, such as wheel, of side-by-side arranged individual blank objects interconnected by sprues and runners originating from the separate substrate manufacturing process. In the context of the present invention the term "pinwheel" is used for such a substrate structure.

The number of blank objects can be at least one, preferably an even number, more preferably an even number between 2-64, between 4-32, or between 8-16.

In one embodiment eight blank objects in a pinwheel is preferred and easy to mount inside the insertable mould assembly, e.g. on the female mounting parts of the insertable mould assembly using axially extending sprues, e.g. if the individual blank object is an intrauterine device (IUD).

A particular suitable individual blank object for being structured and combined into a substrate for use with the insertable mould assembly can have a substantially T-shaped main body, and the at least one overmould cavity be provided to overmould at least or just the stem of the T-shaped main body with an overmoulding second component material, preferably second component material that comprises a pharmaceutical agent or pharmaceutical medicament, e.g. to manufacture an alternative T-shaped contraceptive intrauterine device having smooth edges, corners and transitions. A firm bond between the first component material and the overmoulding second component material can be obtained in some embodiments, however in other embodiments a simple mechanical retention obtained by virtue of structural design serves the purpose of interlocking the component materials together, e.g. when providing a medicament reservoir on the T-shaped main body. Such smooth edges, corners and transitions and homogeneous products are possible to create in injection moulding, but are difficult to achieve by conventional mechanical sheathing of one separate T-shaped body after another.

The overmoulding second component material can be or comprise an elastomer, preferably a silicone compound; more preferred a silicone compound with an admixture or a pharmaceutical agent and/or a pharmaceutical medicament, e.g. an Active Pharmaceutical Ingredient.

For medical purposes any of the first component material and the overmoulding second component material preferable are medical grade, optionally even implant grade in cases of long term uses, such as for IUDs which are considered implants.

The overmoulding second component material may for example be a Liquid Silicone Rubber (LSR) moulding material, low consistency silicone, or other silicone.

If a polymeric material is used the first component material for the substrate can e.g. be a thermoplastic material to be overmoulded by the liquid silicone. Some thermoplastics that liquid silicone has been successfully overmoulded to, and which are useful in the present invention, are Low Density Polyethylene (LDPE), High Density Polyethylene (HDPE), Polypropylene (PP), Thermoplastic Polyurethane (TPU and/or PU), Ethylene-Vinyl Acetate (EVA). Alternatively different thermoplastic elastomers like Styrene-Butadiene Thermoplastic Elastomer (TPE-s), Thermoplastic Polyolefin (TPE-o), Thermoplastic Vulcanisates (TPV) can be used. This list is not exhaustive and the present invention is not limited to any first component materials for the substrate, nor for any overmoulding second component material. The first component material can be other than a polymeric component material, and the person skilled in the art will be aware of combining first and second component materials, optionally after having performed various testing of materials. For medical devices all component materials should be medical, non-toxic, non-carcinogenic grades.

Advantageously, the first mould part has a first insulation plate fitted to the first free mould face, and/or the second mould part has a second insulation plate fitted to the second free mould face so that the temperature of the insertable mould assembly can be kept different from the temperatures of the support plates, through which support plates the overmoulding second material component passes via nozzle(s) and might need to have another temperature than the insertable mould assembly in order to be kept in sufficiently liquid state.

The injection moulding tool includes that the first support plate has first tempering channels and/or and the second support plate has second tempering channel and/or third tempering channels for circulation of a respective tempering medium so that the temperature of the support plates and/or the nozzles of the injection unit can be controlled independently of the temperature of the insertable mould assembly, optionally individually controlled, on the one hand so that the shape and structure of the substrate remains unaffected, and on the other hand so that the temperature of the overmoulding second component material can be kept within a predetermined temperature range wherein the overmoulding second component material is in a sufficiently liquid state suited for injection through the selected tempered nozzle arrangement of the injection unit, and so that the overmoulding second component material does not cure prematurely. Some silicones need to be kept at low temperatures to maintain sufficiently liquid states. For such silicones and similar second component materials the tempering channels are preferably cooling channels. The tempering medium that circulate in any of the first and second tempering channels may be the same or different. The tempering medium that circulates in the third tempering channel may e.g. be water or other liquid medium at a temperature of about or equal to 10°C in case of the overmoulding second component material being silicone with a content of an Active Pharmaceutical Ingredient.

The first support plate has a first insertable mould assembly face that faces the first free mould face of the insertable mould assembly, and an opposite first support plate face that faces the injection moulding machine, preferably facing a stationary section of the injection moulding machine, e.g. a vertical injection moulding machine. The second support plate has a second insertable mould assembly face that faces the second free mould face of the insertable mould assembly and an opposite second support plate face, that faces a moveable section of the injection moulding machine. So the second support plate reciprocates along a common axis in relation to the first support plate to increase and reduce the mutual distance between said plates, to in turn allowing an operator to remove the insertable mould assembly from the injection moulding tool once the second support plate is parted from the first support plate, and to replace the removed insertable mould assembly with a new insertable mould assembly prepared with a substrate to be overmoulded. Then the second support plate are moved towards the first support plate again by allowing the moveable section of the injection moulding machine to move towards the stationary section. The opposite faces of the first support plate and the second support plate may serve as an extra means to keep the insertable mould assembly parts forcibly well together during injection of the overmoulding second component material by the reciprocating injection unit. Suitable means for applying clamping forces to the support plates, and thus also to the insertable mould assembly, can be pneumatical, hydraulical or electrical. The first support plate and the second support plate may also help the locking mechanism to keep the first mould part and the second mould part in such a forcible contact that leakage of overmoulding second material outside the at least one overmould cavity and associated sprues during and after injection cannot take place.

The second support plate preferably has a nozzle tempering system, such as a nozzle cooling system with a second manifold comprising the third tempering channel for circulating of a liquid tempering medium, and a first manifold for directing injected overmoulding second component material to the at least one overmould cavity of the insertable mould assembly.

The temperature in the second tempering channel is continuously equilibrated by a suitable liquid tempering medium circulating in the second tempering channel so that the overmoulding second component material does not start to solidify too early. So the second support plate may optionally be tempered, e.g. to the processing temperature of the overmoulding second component material. Temperature control may be important for operation of the support plates. The overmoulding second component material, e.g. an elastomer, is introduced via the first manifold and flows due to applied injection pressure into the different overmould cavities. Only after the curing or vulcanisation time has ended, the overmoulded substrate can be removed from the overmould cavities of the insertable mould assembly.

So the temperature control of the second support plate may be partly or fully facilitated by the second tempering channels through which a tempering medium can circulate at a suitable temperature, whereas the temperature of the nozzles is controlled by a liquid tempering medium circulating through the third tempering channel and tempering jackets of the injection nozzles.

In some embodiments the temperature of the insertable mould assembly is to some extent conferred separate from the injection moulding machine, however in other embodiment where certain delays for temperature adjusting is acceptable, the tempering channels of the support plates can also be used for adjusting the temperature of the insertable mould assembly and for adjusting the temperature of the injection nozzles as mentioned above.

The first support plate has a first tool cavity for at least partly receiving the first exterior annular wall and the first free face of the first mould part in a fixed position, e.g. above the first tempering channels, and the second support plate has a second tool cavity for at least partly receiving the second exterior annular wall and the second free face of the second mould part, e.g. above the second tempering channels, which first and/or second tempering channels, as mentioned above, are provided to circulate a tempering medium inside the respective first and/or second support plate to control the temperature of the support plates in general.

Any of the first support plate or the second support plate may be adapted to be clamped to the stationary section of the injection moulding machine or to the moveable section of the injection moulding machine.

The first support plate may be adapted to be clamped to the stationary section of the injection moulding machine, and the second support plate may be adapted to be clamped to the moveable section of the injection moulding machine, to facilitate parting and closing of the first support plate and the second support plate to confine in-between them the insertable mould assembly when said first support plate and second support plate are closest to each other, and allow removal of the insertable mould assembly when said first support plate and second support plate are apart.

The injection moulding tool may comprise guide pillars for guided parting and closing of the first support plate and the second plate during the overmoulding procedure, which guide pillars are received in complementary shaped holes in the respective opposite support plate. Such guide pillars are conventional and known to the person skilled in the art of injection moulding.

The axial extent of the insertable mould assembly due to the thickness of the first exterior annular wall and the second exterior annular wall, and the axial thickness of the first support plate and the second support plate due to the presence of the associated first and second tempering channels means that the runner from the first manifold to an overmould cavity could be very long. By providing extended injections nozzles that reach to the inlet gate for the inlet sprue cavity of an overmould cavity when the first support plate and the second support plate are closed around the insertable mould assembly, the runner length can be reduced, or even eliminated and the liquid shot of overmoulding second component material through the tempered nozzle and distribution of said overmoulding second component material inside the at least one overmould cavity be completed fast and uniformly.

The injections nozzles for the overmould cavities are thus conveniently located through the second mould part in fluid communication with the first manifold of the second support plate for injecting the overmoulding second component material, and with the second manifold of the nozzle tempering system for tempering the nozzles.

The substrate is for the insertable mould assembly described and discussed above.

The substrate is a wheel of side-by side arranged individual blank objects interconnected by sprues and runners from the separate substrate manufacturing process. The wheel arrangement makes the interconnected individual blank objects a strong and coherent structure that can be handled without unintended breaking-apart. If the individual objects are of same kind, the wheel structure is not vulnerable to incorrect orientation when put inside the insertable mould assembly. The insertable mould assembly might be configured so that there is only one acceptable orientation of the substrate. This is for traceability, thus to be able to clearly identify if something is wrong in one of the at least one overmould cavity. It should be noted that the traceability will only disappear after the substrate is divided in its individual overmoulded objects.

An exemplary number of blank objects in a wheel may be eight, but any number is possible The number of overmould preferably corresponds to the number of blank objects.

In a preferred embodiment the individual blank object is an intrauterine device, which in a yet preferred embodiment is substantially T-shaped, and wherein the stem of the T-shape is the part to be arranged in the overmould cavity to be overmoulded with a second component material to obtain an overmould component on a part of the substrate.

Such second component material can e.g. be an elastomer, preferably a silicone compound, more preferred a silicone compound with an admixture or an active pharmaceutical medicament, such as a hormone, an anti-microbiological agent, or a combination of one or more of these.

For an intrauterine device the overmould component is a medicament reservoir containing hormones to be released gradually over time to the uterus, e.g. to act as a chemical contraceptive or be used in hormone replacement therapy.

The choice of overmoulding second component material is dependent on many factors to be considered, including but not limited to medical grade, biological acceptance, viscosity at processing temperature, impact on admixed medicament, processing window in view of processing window of substrate, and curing or vulcanisation time and temperature. So the second component material is selected to be workable in the injection moulding tool without the substrate is subject to structural and dimensional changes, and without pharmaceutical activity of the pharmaceutical medicament is affected.

The substrate can e.g. be overmoulded with a second component material comprising at least one or the agents or medicaments selected from the group comprising progesterone and its derivatives, cyproterone acetate, desogestrel, etonogestrel, levonorgestrel, lynestrenol, medroxyprogesterone acetate, norethisterone, norethisterone acetate, norgestimate, drospirenone, gestodene, 19-nor-17-hydroxy progesterone esters, 17a-ethinyltestosterone and derivatives thereof, 17a-ethinyl-19-nor-testosterone and derivatives thereof, ethynodiol diacetate, dydrogesterone, norethynodrel, nestoron, dydrogesterone, allylestrenol, medrogestone, norgestrienone, ethisterone and dl-norgestrel.

Levonorgestrel is a preferred pharmaceutical agent in IUDs and implants.

An injection moulding method for manufacturing an overmoulded object in an injection moulding machine comprises the steps of
a) providing an insertable mould assembly as described and discussed above,
b) providing a substrate selected in accordance with the location and configuration of the at least one overmould cavity of the insertable mould assembly,
c) positioning the substrate inside the insertable mould assembly, and closing and locking together the first mould part and the second mould part of the insertable mould assembly,
d) mounting the closed insertable mould assembly inside the injection moulding tool as described and discussed above,
e) closing the injection moulding tool,
f) injecting a shot of overmoulding second component material,
g) parting the first support plate and the second support plate of the injection moulding tool,
h) removing the insertable mould assembly.

Steps a) - h) can be repeated as many times as desired and as fast as the available number of insertable mould assemblies and the method allows.

In any of step a) and/or step c) any of the first mould part, the second mould part, the insertable mould assembly, and/or the substrate can be thermally preadjusted in a separate thermal adjusting station. So instead of the complete thermal adjustment of the insertable mould assembly must de done while the insertable mould assembly is mounted to the injection moulding tool, as in conventional injection moulding methods, thermal adjustment of the insertable mould assembly, and thus of the at least one overmould cavity as well as of the substrate, can be done to a very large extent outside the injection moulding tool because the insertable mould assembly is detachable and is used detachable, this way saving valuable time of use of the injection moulding machine. The insertable mould assembly is very easy and fast to mount to the injection moulding tool so that additional temperature adjustment of said insertable mould assembly merely would be for maintenance of a selected processing temperature during steps d), e) and f), if needed at all. The separate thermal preadjusting of e.g. insertable mould assemblies with substrates compensates for the time used to replace an insertable mould assembly with a new one, as defined by step h), and steps a)- c) . Processing time is saved because the insertable mould assembly is already at the processing temperature suited for the overmoulding step. A tempering medium circulating in the tempering channels prevents thermal loss or thermal gain, depending on the requirements for the specific task, both when the supports plates are parted and when they are closed, so that also the overmoulding second component material is maintained at desired temperature, and none of the injection nozzles clot while the insertable mould assembly is replaced or during an injection cycle.

So contrary to the prior art injection moulding methods the method does not rely on that all tempering takes place completely by means of the tempering channels of the injection moulding tool. Moreover, overmoulding thermoplastic materials with elastomeric materials is a challenge, which may require that the insertable mould assembly and injection moulding tool have different temperatures. This challenge is even bigger when a pharmaceutical medicament or agent is dispersed in the overmoulding second component material and needs to be treated carefully in order not to destroy pharmacological activity and effect.

Preferably, the first insulation plate and/or the second insulation plate is/are also thermally preadjusted, which insulation plate(s) is/are inserted between the respective support plate and its corresponding mould part, to avoid that a support part and a mould part exchanges thermal energy, which might cause the overmoulding second component material to start solidifying in the first manifold or inside the nozzles, or even start solidifying before an overmould cavity is completely full.

The thermal preadjusting of the insertable mould assembly may involve preheating in a separate preheating station, which separate preheating station simply could be a heating chamber, optionally an oven.

In step f) the injection nozzles associated with the second support plate can then also be tempered, cooled or heated, via the third tempering channel to preserve a predetermined temperature of the overmould material during it's injection.

The method may advantageously comprise step i) of placing the closed insertable mould assembly removed in step h) at a curing station for a curing period selected to allow the overmould component to cure on the substrate so that said resulting overmoulded substrate can be taken out of the insertable mould assembly as an integral structure with the solidified overmould component on the substrate, mechanically, adhered and/or bonded to the substrate.

Perferably in step i) the clamping mechanism is released prior to the insertable mould assembly being placed at the curing station. Alternatively, the clamping mechanism is released after curing.

A further option of step i) is that the clamping mechanism is released, to allow a compressed spring mechanism to relax and part the first mould part and the second mould part at least slightly. Even a small gap between the two mould halves provides for release of gasses that need to be vented out to speed up the curing processes.

In a preferred embodiment the curing station is a conveyor oven with a conveyor belt speed selected so that the overmoulding second component material can cure sufficiently on the substrate before the substrate is to be taken out of the insertable mould assembly upon exit of the conveyor oven with the overmould component properly positioned on the substrate.

The method may further comprise step j) of removing the closed insertable mould assembly from the curing station, opening the clamping mechanism fully, opening the insertable mould assembly, removing the overmoulded substrate, and reusing the insertable mould assembly in step a).

The reusing of step j) may include cleaning the insertable mould assembly of overmoulding second component material residues.

The substrate of step b) is described and discussed above.

The overmoulded substrate can be obtained by any of the insertable mould assembly, the injection moulding tool or the method as defined above. Similar overmoulded substrates do not exist in the prior art. The overmoulded substrate is a pinwheel consisting of eight interconnected T-shaped IUDs that can be divided into eight individual overmoulded T-shaped IUDs, but other numbers are within the scope of the present invention.

The present invention also relates to an intrauterine device obtained from the above described and defined overmoulded substrate simply by first dividing the overmoulded substrate into individual objects, and then removing any sprues and runners.

This way a novel overmoulded object can be obtained, which object has smooth transition between the overmoulded divided-out blank object and the corresponding overmould component.

It has also been made possible to manufacture completely overmoulded objects using this method, tool and assembly. Such completely overmoulded objects may e.g. be suited for implantation or insertion in a body cavity to achieve a sustained medicament release, locally or centrally, in a patient. A medicament-release bolus can be provided on a blank object or any other carrier that can be part of a substrate or be suspended in the insertable mould assembly using the guidelines, means and methods.

The injection moulding tool above is described by reference to a stationary section and a moveable section, wherein injection takes place from the moveable section, in some embodiment the arrangement may be reversed so the stationary section is the part of the injection moulding tool wherefrom injection takes place. An injection unit can be provided to inject from any convenient angle and position in relation to the injection moulding tool.

In case of a vertical injection moulding machine the insertable mould assembly can be placed in the lower stationary section and the upper section moves together with the injection unit, thus the upper section is the section wherefrom injection of the overmoulding second component material takes place.

The overmoulded object can in highly preferred embodiments be used as a contraceptive means or as a hormone replacement therapy device, such as an IUD. Use of the substrate in an implant is also within the scope of the present invention.

The invention will now be described in further details by way of examples and exemplary embodiments with reference to the drawings, in which
Fig. 1 is a perspective view, seen from the second mould part, of the insertable mould assembly in assembled state with additional insulation plates,
Fig. 2 shows the same seen from the first mould part,
Fig. 3 shows the insertable mould assembly of fig. 1 in open state with a substrate ready for being mounted to the mould parts,
Fig. 4 shows the insertable mould assembly of fig. 2 in open state with a substrate ready for being mounted to the mould parts,
Fig. 5a and 5b show, in perspective, a substrate for the insertable mould assembly seen in figs. 3 and 4 in an enlarged scale view,
Figs. 6a and 6b are perspective views of the first mould part seen from opposite faces,
Figs. 7a and 7b are perspective views of the second mould part seen from opposite faces,
Fig. 8 is a perspective, partly exploded view of a vertical arrangement of the insertable mould assembly with extended nozzles extending through nozzle holes directed towards the at least one overmould cavity,
Fig. 9 shows perspective views of the male guide parts of the insertable mould assembly,
Fig. 10 is an exploded perspective view of an injection moulding tool for the insertable mould assembly shown in the previous figures,
Fig. 11a is a perspective view of the first support plate seen oblique from the first insertable mould assembly face,
Fig. 11b is a perspective view of the first support plate seen oblique from the first support plate face,
Fig. 11c is a section taken along line XIc-XIc in fig. 11a,
Fig. 12a is a perspective view of the second support plate face seen oblique from the second insertable mould assembly face, Fig. 12b is a perspective view of the second support plate seen oblique from the second insertable mould assembly face,
Fig. 12c is a section taken along line XIIc-XIIc in fig. 12a,
Fig. 13 shows, in perspective, an injection moulding tool in closed condition,
Fig. 14 is a perspective view of the injection moulding tool in open condition,
Fig. 15 shows, in perspective, the first mould part with a resting pinwheel provided with overmould components,
Fig. 16 shows, in perspective, a pinwheel with cured overmould components,
Fig. 17 shows a fragment of the pinwheel seen in fig. 16, and
Fig. 18 shows an intrauterine device manufactured in accordance with the blank object, the insertable mould assembly, and the injection moulding tool shown in the previous figures.

The present invention is shown and described below in relation to a vertical injection moulding machine wherein the second support plate with the injection unit moves upwards along a vertical axis away from the first support plate. This should not be construed as a limiting setup. The opposite arrangement where the first support plate is moved downwards in relation to the second support plate is also possible, and so is a horizontal injection unit. In the figures the components are shown in a horizontal arrangement purely for enhancing the overview. Thus the axis A is in fact vertical in the overmoulding position of the exemplary insertable mould assembly when inserted in the vertical injection moulding tool. The second support plate is in this embodiment the topmost moveable plate.

Emphasis is further made that horizontal injection moulding machines, side injection units, both perpendicular or at an angle, are not excluded, and may be preferred for some substrates, insert moulds, insertable mould assemblies, injection moulding tools, and/or overmoulding second component materials.

Exclusively for illustrative purposes the substrate is shown and discussed with reference to the drawing as being a pinwheel of eight T-shaped polymeric blank objects, and the overmoulding second component material as being a liquid silicone with an admixture of a medicament for manufacturing eight identical T-shaped intrauterine devices in one and same overmoulding injection step, thus a medicament reservoir of an Active Pharmaceutical Ingredient on an IUD. Emphasize is made that the present invention can be carried out with another number of blank objects, design of substrate, number and design of overmoulding cavities, and that the overmoulding cavities can be same or different. A number of 2 - 64 overmoulding cavities is foreseeable. The "pinwheel" design should not be construed as limiting in terms of shape of substrate. Other shapes are foreseeable within the scope of the present invention and other polymers useable.

An insertable mould assembly can overmould several copies of blank objects in the same manner in a single "shot", however overmoulding a substrate composed of different blank objects is not excluded. The number of overmould cavities, i.e. the "impressions" that receives the part of the blank object to be overmoulded, defines the number of produced overmould components, which in the below discussion as an example is a medicament reservoir.

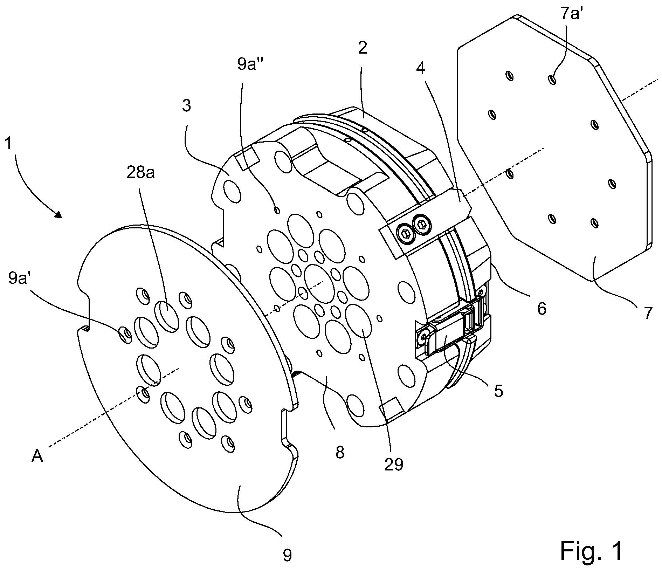

Fig. 1 is a perspective view of an insertable mould assembly 1. The insertable mould assembly 1 has a first mould part 2 axially aligned along centre axis A with an opposite second mould part 3 using alignment means 4. Subsequent to alignment the first mould part 2 and the second mould part 3 are coupled together by means of a clamping mechanism 5. The first mould part 2 is in the present case adapted for being mounted to or in a lower section of a vertical injection moulding machine (not shown) and the opposite second mould part 3 is adapted for engaging with an upper section of a vertical injection moulding machine (not shown), which upper section includes the injection unit (not shown) for injecting the overmoulding second component material into the insertable mould assembly 1 when in closed condition, which upper section is moveable upwards.

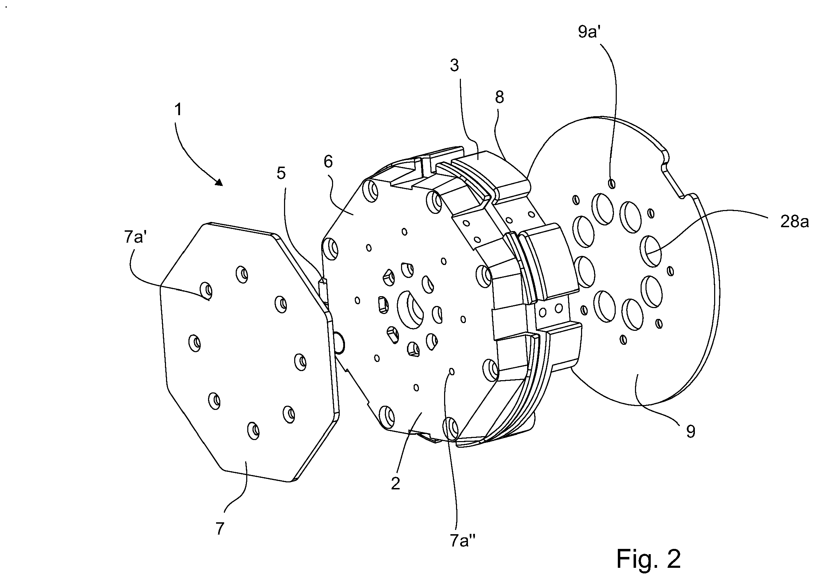

Fig. 1 shows the insertable mould assembly 1 from the second mould part 3, and fig. 2 shows the insertable mould assembly 1 from the first mould part 2 when said first mould part 2 and said second mould part 3 have been aligned and interlocked to confine a substrate (not visible) between these mould parts 2,3. The first mould part 2 has a first free mould face 6 facing a first insulation plate 7, and the second mould part 3 has a second free mould face 8 facing a second insulation plate 9. In order to secure the first insulation plate 7 to the first mould part 2, the first insulation plate 7 has a ring of first plate screw holes 7a' opposite a ring of aligned first free face screw holes 7a'' of the first mould part 2. Similarly, the second insulation plate 9 has a first ring of second plate screw holes 9a' oppositely aligned second free face screw holes 9a'' of the second mould part 3. Insulations plates and mould parts can simply be screwed together using appropriate screws. The second insulation plate 9 also has a second ring of holes being first nozzle holes 28a aligned with nozzle passageways 29a,29b,29c,29d,29e,29f,29g,29h of the second mould part 3.

Further details of the mould parts 2,3 of the insertable mould assembly 1 will be described in relation to the subsequent figures where the mould parts 2,3 are parted.

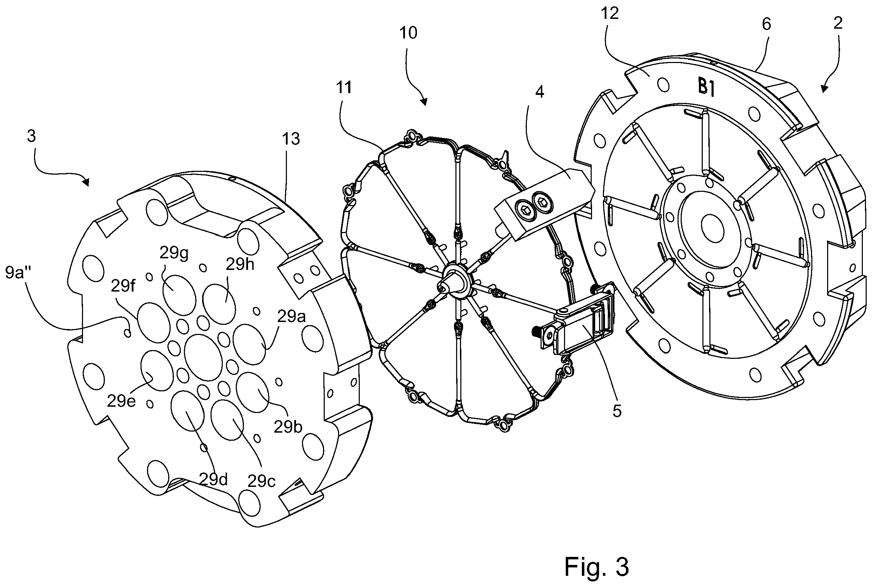

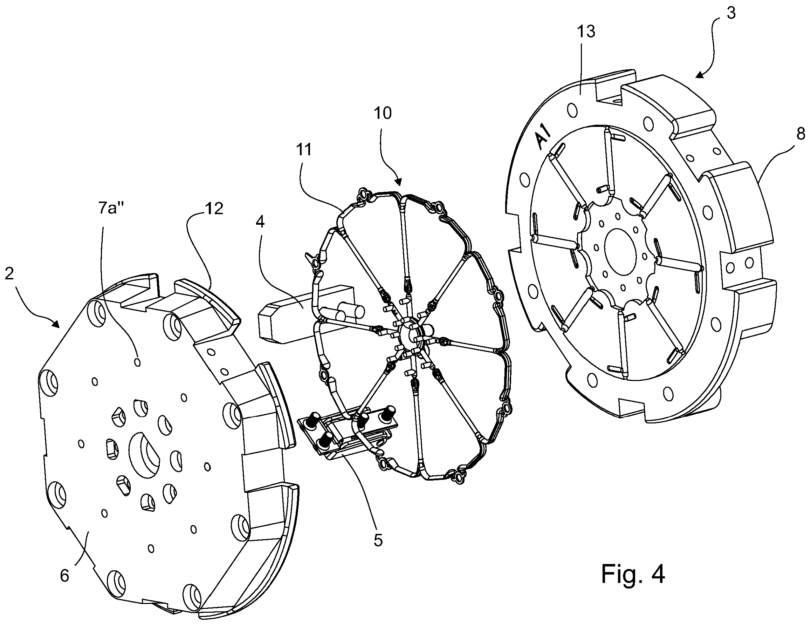

Fig. 3 and 4 are substantially the same illustrations as figs. 1 and 2 respectively, except that the insulation plates 7, 9 have been left out and the first mould part 2 and the second mould part 3 have been parted to illustrate that a substrate 10, in form of a pinwheel 11, can be positioned between the first mould cavity face 12 of the first mould part 2 and the second cavity face 13 of the second mould part 3. The alignment means 4 and the clamping mechanism 5 are seen detached from the mould parts 2,3.

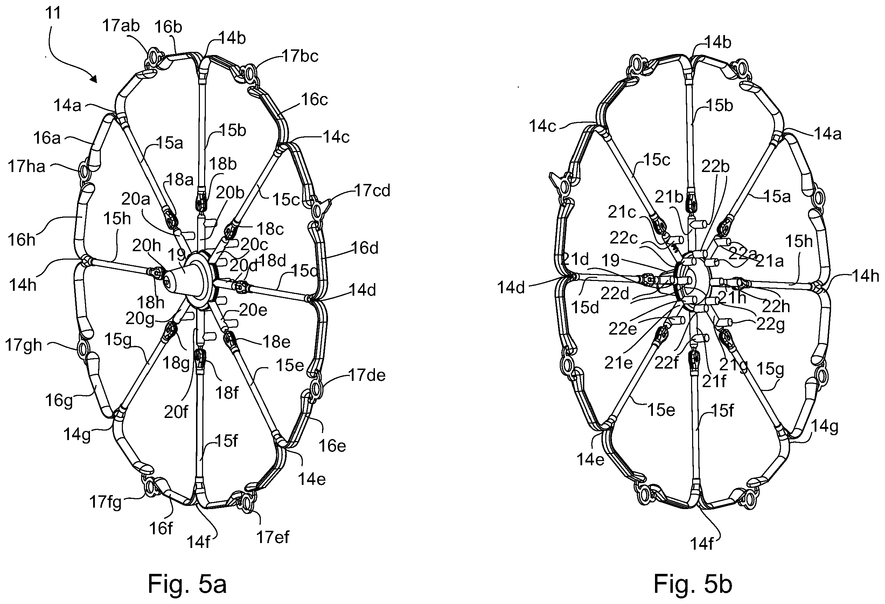

Fig. 5a and fig. 5b show, in enlarged scale view, the substrate 10, in form of a pinwheel 11, that is insertable in the exemplary insertable mould assembly 1.

The pinwheel 11 consists of eight circumferentially arranged identical and connected T-shaped blank objects 14a, 14b, 14c, 14d, 14e, 14f, 14g, 14h.

Each T-shaped blank object has a stem 15a,15b,15c,15d,15e,15f,15g,15h that terminates in a head 16a,16b,16c,16d,16e,16f,16g,16h with two opposite arms radiating away from each other from the end of the stem 14a,14b,14c,14d,14e,14f,14g,14h to create the circumference of the pinwheel. The free arm ends of two opposite arms of two opposite heads 16a,16b,16c,16d,16e,16f,16g,16h that are arranged annularly in the pinwheel 11 adjacent each other are connected by first female mounting parts in form of first connector bodies 17ab,17bc,17cd,17de,17ef,17fg,17gh,17ha. Opposite the heads 16a,16b,16c,16d,16e,16f,16g,16h the T-shaped blank objects 14a,14b,14c,14d,14e,14f,14g,14h have free stem ends 18a,18b,18c,18d,18e,18f,18g,18h connected to a common centre pin or cone 19 via respective second connector bodies 20a,20b,20c,20d,20e,20f,20g,20h.

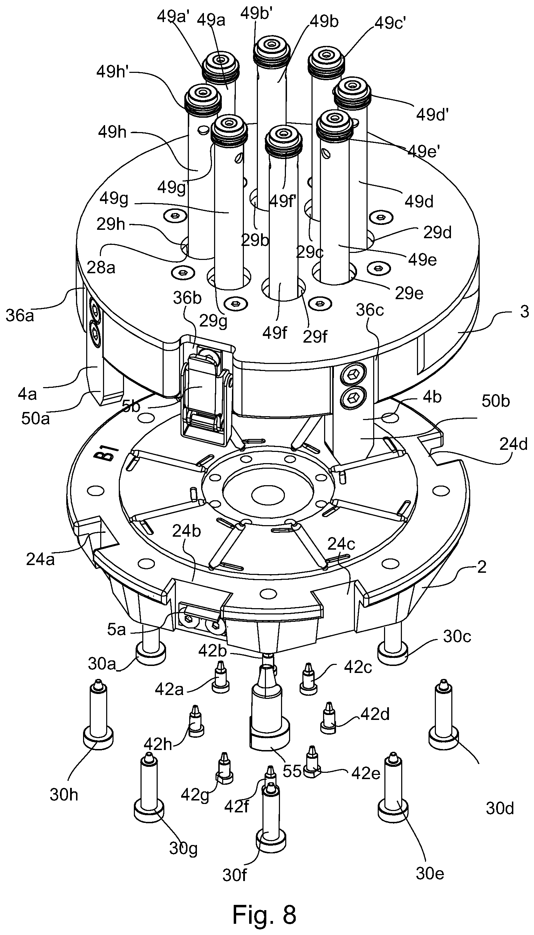

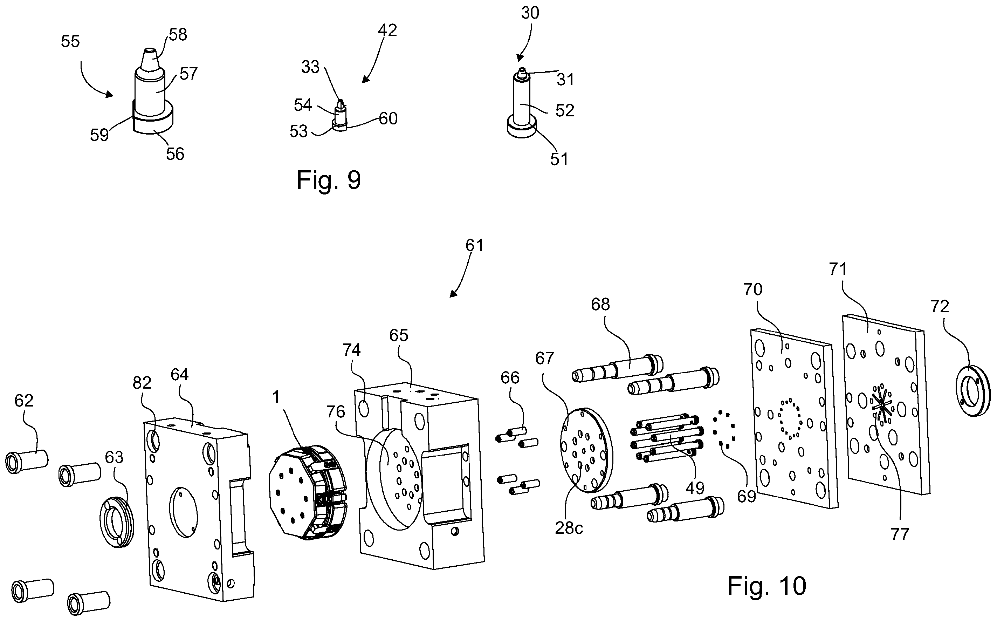

The second connector bodies 20a,20b,20c,20d,20e,20f,20g,20h have spacer bodies 21a,21b,21c,21d,21e,21f,21g,21h with two axially protruding pins 22a,22b,22c,22d,22e,22f,22g,22h on each second connector body 20a,20b,20c,20d,20e,20f,20g,20h. The centre pin or cone 19 is suited for mounting on a male guide part of the first mould part (see figs. 8 and 9), and for that purpose the centre pin or cone 19 protrudes axially in the opposite direction of the pins 22a,22b,22c,22d,22e,22f,22g,22h. The axially protruding pins 22a,22b,22c,22d,22e,22f,22g,22h are reminiscences from the separate moulding step, but can serve as a convenient spacer when stacking several premade pinwheels 11 before they shall be overmoulded.

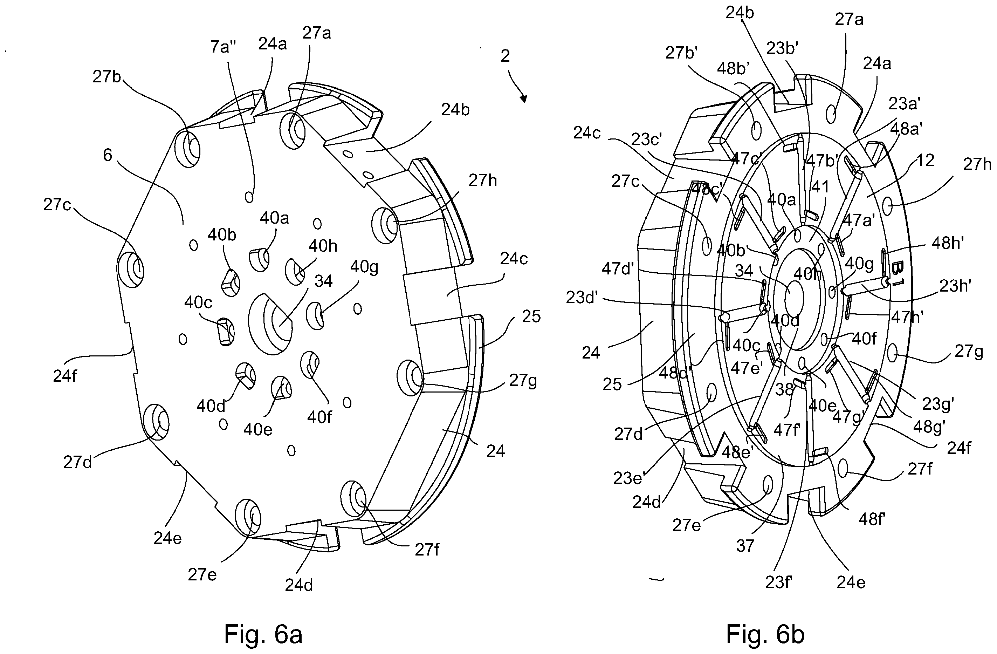

Fig. 6a shows, in perspective, the first mould part 2 from the first free mould face 6, and fig. 6b shows the first mould part 2 from the first mould cavity face 12. The views of figs. 6a and 6b are rotated about 90° clockwise in relation to the view of the first mould part 2 seen in fig. 3.

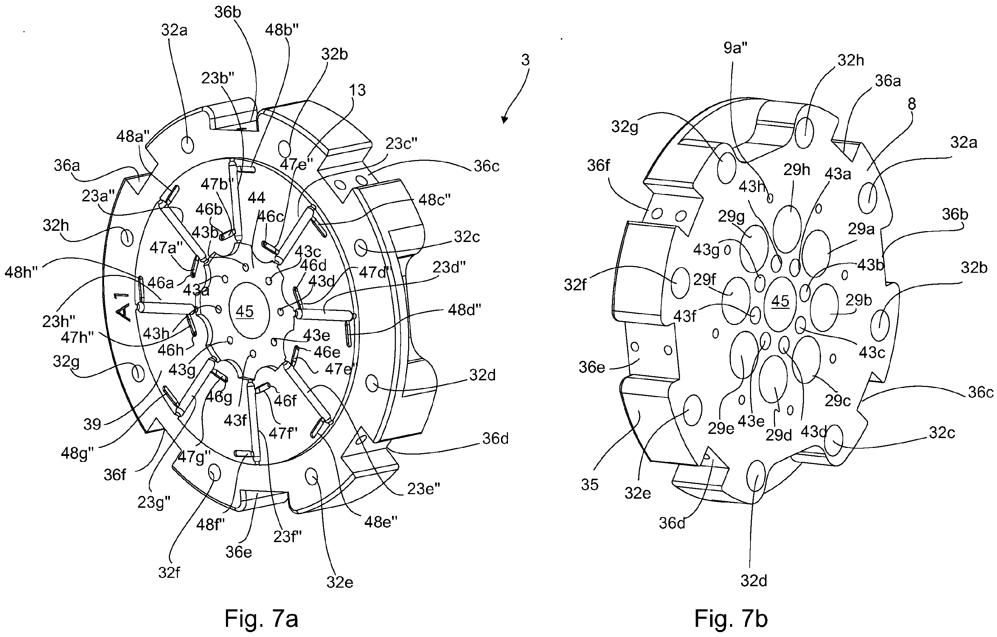

Fig. 7a shows in perspective the second mould part 3 from the second mould cavity face 13, and fig. 7b shows the second mould part 3 from the second free face 8. The views of figs. 7a and 7b are rotated about 90° clockwise in relation to the view of the second mould part 3 seen in fig. 3.

The first mould cavity face 12 has eight first overmould cavity halves 23a',23b',23c',23d',23e',23f',23g',23h' provided on an elevated annular and first ring-shaped plateau 37. The second mould cavity face 13 has eight second overmould cavity halves 23a",23b",23c",23d",23e",23f",23g",23h" provided on an elevated annular and second ring-shaped plateau 39 that in assembled state of the insertable mould assembly 1 contacts the first ring-shaped plateau 37 so that the second overmould cavity halves 23a",23b",23c",23d",23e",23f",23g",23h" match above the first overmould cavity halves 23a',23b',23c',23d',23e',23f',23g',23h'. In the close condition of the mould assembly 1 the first overmould cavity halves 23a',23b',23c',23d',23e',23f',23g',23h' and the second overmould cavity halves 23a",23b",23c",23d",23e",23f", 23g",23h" together delimit the overmould cavities 23a,23b,23c,23d,23e,23f,23g,23h.

A first center cavity 38 of the first ring-shaped plateau 37 serves to receive the pins 22a,22b,22c,22d,22e,22f,22g,22h on the second spacer bodies 20a,20b,20c,20d,20e,20f,20g,20h of the pinwheel 11, so that the pinwheel 11 does not deflect upon assembling of the first mould part 2 and the second mould part 3. A male guide part 55 can be inserted via asymmetrically first centre hole 34 at the centre of the first mould part 2 to axially align the pinwheel 11, see figs. 8 and 9, and position the pinwheel 11 correct so that the stems, i.e. the parts of the pinwheel 11 to be overmoulded, are in correct position in the overmold cavities.

For the first mould part, a first exterior annular wall 24 is defined between the first free face 6 and the first mould cavity face 12. The first exterior annular wall 24 has, in the present case, six first annular recesses 24a, 24b, 24c, 24d, 24e, 24f arranged in two opposite groups, each of three first recesses, each for accommodating a clamping mechanism 5 with an alignment means 4 in radial neighbour distance on both sides. The first mould cavity face 12 extends radially into a first annular coupling flange 25 for coupling to a second annular coupling flange 26 of the second mould part 3.

Annularly spaced first holes 27a,27b,27c,27d,27e,27f,27g,27h are provided along the perimeter of the first mould cavity face 12 of the first mould part 2 and serve to receive first male guide parts (not shown) of the first mould part 2 to further secure the correct position of the pinwheel 11 on the first mould cavity face 12. The free ends of the male guide parts protrude beyond the first mould cavity face 12 and extend beyond the plane of the first annular coupling flange 25 of the first cavity face 12 to facilitate mounting of the first connector bodies 17ab,17bc,17cd,17de,17ef,17fg,17gh,17ha of the pinwheel 11. Second male guide parts 42a,42b,42c,42d,42e,42f, 42g,42h (see fig. 8) of the first mould part 2 are inserted via second holes 40a,40b,40c,40d,40e,40f,40g,40h extending axially through an annular step 41 provided between the inner radius of the first plateau 37 and the first centre hole 34 of the first centre cavity 38. The second male guide parts 42a,42b,42c, 42d,42e,42f,42g,42h may serve to hold the free stem ends 18a,18b,18c,18d,18e,18f,18g,18h of the pinwheel, which free stem ends 18a,18b,18c,18d,18e,18f,18g,18h then serve as separate guide parts, in the present case female guide parts.

In the present case the first holes 27a,27b,27c,27d,27e,27f, 27g,27h surround the first plateau 37 and extend through the first exterior annular wall 24 from the first free mould face 6 to the first mould cavity face 12. At the first free mould face 6 the first holes 27a,27b,27c,27d,27e,27f,27g,27h are configured to receive an enlarged head of first male guide parts 30a,30b,30c,30d,30e,30f,30g,30h, as shown in fig 8, so that such heads can be kept substantially flush with the first free mould face 6 while the opposite free ends 31a, 31b, 31c,31d,31e,31f,31g,31h of the male guide parts 30a, 30b, 30c, 30d, 30e, 30f, 30g, 30h protrude with a tip axially from the first mould cavity face 12 via the first holes 27a,27b,27c,27d,27e,27f,27g,27h. The free ends 31a, 31b,31c, 31d, 31e, 31f, 31g, 31h of the first male guide parts 30a, 30b, 30c, 30d, 30e, 30f, 30g, 30h of the first mould part 2 engage opposite, aligned second holes 32a, 32b, 32c, 32d, 32e, 32f, 32g,32h in the second mould part 3 when the first connector bodies 17ab,17bc,17cd,17de,17ef,17fg, 17gh,17ha of the pinwheel 11 are mounted to the free ends 31a,31b,31c,31d,31e,31f,31g,31h of the first male guide parts 30a, 30b, 30c, 30d, 30e, 30f, 30g, 30h to allow the first mould cavity face 12 and the second mould cavity face 13 to suspend the pinwheel 11 properly for the overmoulding process once the first mould part 2 and the second mould part 3 are aligned by the alignment means 4 and clamped together by the clamping mechanism 5.

As seen in figs. 7a and 7b the second mould part 3 has a second exterior annular wall 35 defined between the second free mould face 8 and the second mould cavity face 13. The second exterior annular wall 35 has, in the present case, six second annular recesses 36a,36b,36c,36d,36e,36f arranged in two opposite groups, each of three second recesses, axially alignable with the first annular recesses 24a,24b,24c,24d,24e,24f of the first mould part 2, to allow the alignment means 4 and the clamping mechanism 5 to bridge both mould parts 2,3.

Similar coupling arrangement of the pinwheel between the first mould part 2 and the second mould part 3, as described in relation to the first male guide parts 30a, 30b, 30c, 30d, 30e, 30f, 30g, 30h, are possible but not mandatory. In the present embodiment the free end tips 42a',42b',42c',42d',42e',42f',42g',42h' of the second male guide parts 42a,42b,42c,42d,42e,42f,42g,42h engage in third holes 43a,43b,43c,43d,43e,43f,43g,43h provided in a second centre cavity 44 of the second mould part 3, to further secure that the pinwheel 11 is positioned completely correct and does not dislocate when the first mould part 2 and the second mould part 3 are assembled, thus when the first plateau 37 and the second plateau 39 are brought together using the alignment means 4, and the clamping mechanism 5 locks said mould parts 2,3 firmly together in order to be subjected to the overmoulding process. A second centre hole 45 at the second centre cavity 44 of the second mould part 2 is axially aligned with the first centre hole of the first mould part 2 to axially align the pinwheel 11 by receiving the locating tip 58 of the asymmetrical centre plug 55 shown in fig. 8.

Fig. 8 is a perspective partly exploded view of a vertical arrangement of the insertable mould assembly 1. In this exemplary vertical arrangement the first mould part 2 is the lower part of the insertable mould assembly to be secured to a stationary lower section of the injection moulding machine. The second mould part 3 is the upper part adapted to fit with a moveable section of the injection moulding machine. Thus in the present non-exhaustive example the injection unit with the injection nozzles is moveable vertically as well.

Each nozzle passageway 29a,29b,29c,29d,29e,29f,29g,29h of the second mould part 3, as seen more clearly in fig. 7b, has a respective injection nozzle 49a,49b,49c,49d,49e,49f,49g,49h, as seen in fig. 8.

A shot of overmoulding second component material are injected directly into an overmould cavity 23a,23b,23c,23d,23e,23f,23g, 23h via an injection inlet gate 46a,46b,46c,46d,46e,46f,46g,46h for each overmould cavity 23a,23b,23c,23d,23e,23f,23g,23h. The injection inlet gates 46a,46b,46c,46d,46e,46f,46g,46h for the nozzles shown in fig. 8 are located surrounding the second cavity 44.

From the injection inlet gates 46a,46b,46c,46d,46e,46f,46g,46h the overmoulding second component material passes via an inlet sprue cavity 47a,47b,47c,47d,47e,47f,47g,47h into the overmould cavities 23a,23b,23c,23d,23e,23f,23g,23h. And to make sure that the overmould cavities 23a,23b,23c,23d,23e,23f,23g,23h are completely filled a surplus of overmoulding second component material of the shot may be taken via the overmould cavities 23a,23b,23c,23d,23e,23f,23g,23h into outlet sprue cavities 48a,48b,48c,48d,48e,48,48g,48h.

The inlet sprue cavities 47a,47b,47c,47d,47e,47f,47g,47h and the outlet sprue cavities 48a,48b,48c,48d,48e,48f,48g,48h are defined when the insertable mould assembly 1 is closed. An inlet sprue cavity 47a,47b,47c,47d,47e,47f,47g,47h is thus defined by first inlet sprue cavity halves 47a',47b',47c',47d',47e',47f',47g',47h' formed in the first mould cavity face 12 and opposite second inlet sprue cavity halves 47a",47b",47c",47d",47e",47f",47g",47h" formed in the opposite second mould cavity face 13.

The ring of extended nozzles 49a,49b,49c,49d,49e,49f,49g,49h extends through aligned first nozzle holes 28a of the second insulation plate 9 and nozzle passageways 29a,29b,29c,29d,29e,29f,29g,29h of the second mould part 3 above the injection inlet gates 46a,46b,46c,46d,46e,46f,46g,46h for the at least one overmould cavity 23a,23b,23c,23d,23e,23f, 23g,23h. The nozzles 49a,49b,49c,49d, 49e,49f,49g,49h, that are adapted for circulating a tempering medium along an axial length, have a respective collar 49a,49b,49c,49d,49e,49f, 49g,49h at the end that faces away from the insertable mould assembly, which is utilised in mounting the nozzles 49a,49b,49c,49d,49e,49f,49g,49h in a second support plate 65 of the injection moulding tool 61, as seen better in fig. 10. The nozzles 49a,49b,49c,49d,49e,49f,49g,49h are kept in place by a first deck plate 70 by means of seals 69.

The clamping mechanism 5 consists of a first latch member 5a in recess 24b on the first exterior annular wall 24 of the first mould part 2, and a second latch member 5b in recess 36b on the second exterior annular wall 35 on the second mould part 3. Both the first latch member 5a and the second latch member 5b are screwed in holes in the respective recesses to be firmly secured to the respective annular wall of the respective mould part. In recesses 36a,36c on opposite sides of the second latch member 5b and at an angular distance from said second latch member 5b, alignment means 4, in form of flat, elongated, tapering guide plates or rods 50a,50b, are fastened by means of screws in screw holes of the respective recess 36a,36c. Although not visible in fig. 8, or fully shown in figs. 1 and 2, a similar arrangement of alignment means 4 and clamping mechanism 5 is preferably provided diametrically opposite the above-described arrangement to ensure complete closing of the insertable mould assembly. The alignment means and clamping mechanism can be fastened with other means than screws and be designed differently. The clamping mechanism can be any kind of clamping and clamping mechanism suited for keeping the overmould cavities closed during injection and handling of the insertable mould assembly, both during inserting in and removal from the injection moulding tool of the injection moulding machine.

Eight first male guide parts 30a, 30b, 30c, 30d, 30e, 30f, 30g, 30h are provided for inserting into the first holes 27a,27b,27c,27d,27e,27f,27g,27h of the first mould part 2. Eight axially asymmetrical second male guide parts 42a,42b,42c,42d,42e,42f,42g,42h are provided for inserting into the second holes 40a,40b,40c,40d,40e,40f,40g,40h of the first mould part 2, and an asymmetrical third male guide part 55 is provided for being inserted into the asymmetrically first centre hole 34 of the first mould part 2 to mount and locate the centre cone 19 of the pinwheel 11. The second male guide parts 42a,42b,42c,42d,42e,42f,42g,42h and the first male guide parts 30a, 30b, 30c, 30d, 30e, 30f, 30g, 30h are arranged in concentric rings and have the centre cone 19 as a common centre. The radius of the ring of the first male guide parts 30a,30b, 30c,30d,30e, 30f, 30g, 30h is larger than the radius of the ring of the second male guide parts 42a,42b,42c,42d,42e,42f,42g,42h.

Since all first and all second guide parts are identical only one of each are described in further details below with reference to fig. 9 and using the respective generic numerals 30 and 42.

Accordingly, a first male guide part 30 has a first enlarged head 51 that via an elongate first stem 52 ends in a first free end 31, a first tip, that serves as a first mount for a female first connector body 12, as seen in fig. 9. A second male guide part 42 has a second enlarged head 53 that via an elongate second stem 54 ends in a second free end 33, a second tip, that serves as a second mount for holes in the free stem ends 18 of the pinwheel 11. The second enlarged head 53 has a flat axially extending edge or surface 60, or can be otherwise asymmetrical, to prevent dislocation after mounting and limit freedom to position the pinwheel 11. The third male guide part 55 for mounting and centring of the cone 19 of the pinwheel, has a third enlarged head 56 that extends via en elongate third stem 57 into a third free end 58. The third enlarged head 56 has a flat face or edge 59 to make this head 58 asymmetrical and prevent the mounted pinwheel 11 from rotation. This way there is only one acceptable orientation of the pinwheel even if all the ingoing parts are the same. The third male guide part 55 is thus oddly shaped so it will only fit in one orientation. In this way is has become possible to see if something is wrong in one of the eight overmoulding cavities of the insertable mould assembly to allow repair prior to reuse. The traceability will disappear only after the pinwheel 11 has been taken apart in its eight overmoulded T-shaped blank objects, in the present case IUDs.

Fig. 10 shows a horizontal arrangement, in perspective and exploded, of an injection moulding tool 61 for the above described and discussed insertable mould assembly 1. Emphasis is made that this particular injection moulding tool 61 is in fact for vertical arrangements, as indicated in fig. 8, thus the right-hand side of fig. 10 faces upwards. Further, where several components are identical the generic reference numeral without added letter is used for simplicity. For example, in the previous detailed description the eight nozzles have each their reference number 49a,49b,49c,49d,49d,49e,49f,49g,49g and have been referred to individually by those. In the further detailed description only one of a set of identical individual components will be discussed and onwards be referred by the generic reference number, in case of e.g. the above nozzles now using just the reference numeral 49 and discussing one component of a set as being representative for the whole set.

The injection moulding tool 61 comprises seen from left to the right four guide bushings 62, a first locating ring 63, a first support plate 64, the insertable mould assembly 1 loaded with a pinwheel 11, the second support plate 65, six spring plungers 66, a holder plate 67, four guide pillars 68, eight extended nozzles 49 provided with sealing rings 69, the first deck plate 70, a second deck plate 71, and a second locating ring 72. In the vertical arrangement the first support plate 64 is at the lower part of the injection moulding tool, and the second support plate 65 is above the first support plate 64. Together the first support plate 64 and the second support plate 65 define a mould frame 73 for the insertable mould assembly 1. The first support plate 64 and the second support plate 65 are guided together, into the mould frame 73 of the injection moulding tool 61, at opposite aligned corners holes 74 by means of the four guide pillars 68. The guide bushing 62 serves, together with the first locating ring 63, for positioning the mould frame 73, in particular the first support plate 64, correct in the lower section of the injection moulding machine. The second locating ring 72 serves to centre the mould frame 73 in relation to the upper section of the injection moulding machine.

The spring plungers 66 push via plunger holes 66a in the second support plate 65 the second support plate 65 away from the first support plate 64 leaving the insertable mould assembly 1 to stay within the lower section of the injection moulding tool 61. So when the support plates 64,65 of the mould frame 73, at the end of an injection cycle, are parted to replace the insertable mould assembly 1, the insertable mould assembly 1 sits in the second support plate and can be removed manually or e.g. by means of a robot. The spring plungers 66 are of the conventional kind and known to the person skilled in the art, thus no further description is needed for those.

The nozzles 49 are mounted in parallel to the second support plate 65 and moveable together with the second support plate as an integral unit. The nozzles 49 passes via third nozzle holes 28c of the holder plate 67 into the second nozzle holes 28b of the second support plate 65 to reach the overmould cavities 23 of the insertable mould assembly 1. So the second nozzle holes 28b, the first nozzle holes 28a and the nozzle passageways 29 are all aligned when the second mould part 3 of the insertable mould assembly 1 is located in the second tool cavity 75 and the first mould part 2 of the insertable mould assembly 1 is located in the first tool cavity 76. Each nozzle 49 has a respective end collar 49'.

The first deck plate 70 and the second deck plate 71 act together to define a first manifold 77 for dividing a single stream or shot of overmoulding second component material to each nozzle 49. Depending on the kind of overmoulding second component material the deck plates 70,71 may be kept cold, warm or hot. For liquid silicones (LSR) the deck plates 70,71 are kept cold.

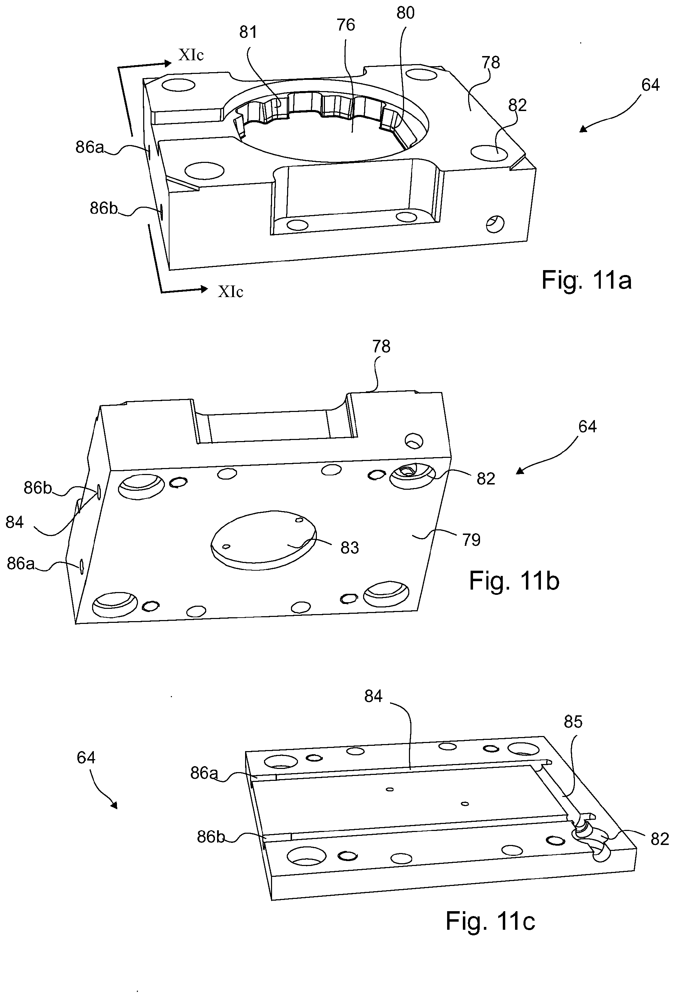

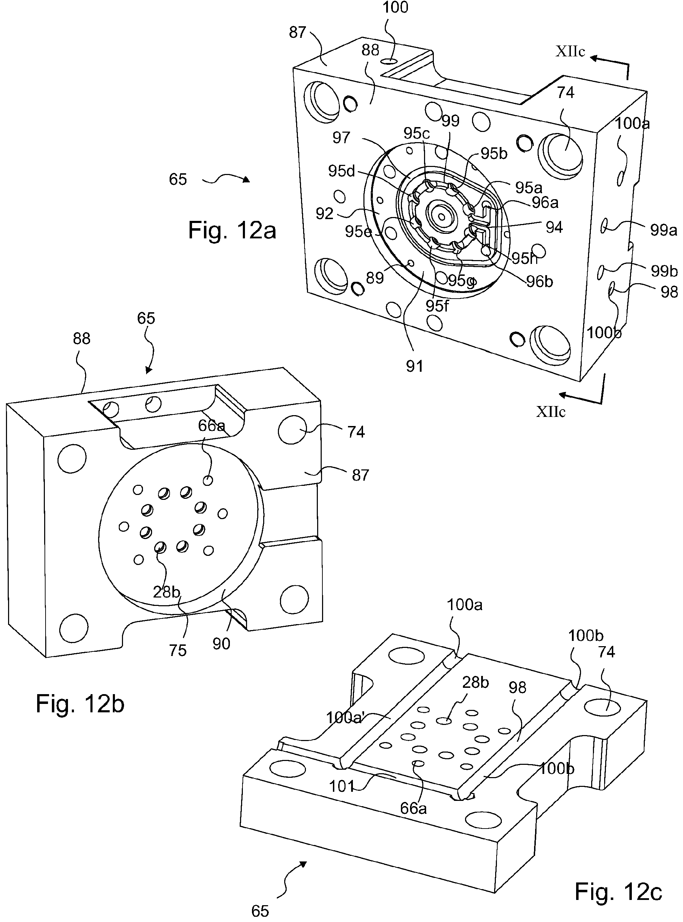

The first support plate 64 and the second support plate 65 will be described further with reference to following figs. 11a,b,c and 12a,b,c.

Fig. 11a shows the first support plate 64 in perspective seen from a first insertable mould assembly face 78, and fig. 11b shows the first support plate 64 from the opposite first support plate face 79 for securing the first support plate 64 to the lower section or platen of the injection moulding machine (not shown), which lower platen in the present embodiment is stationary, but in other embodiments can be the moveable section or platen.

The first exterior annular wall 24 of the first mould part 2 is configured to be received inside the first tool cavity 76 so that the first free mould face 6 is accommodated inside said first tool cavity 76. The first exterior annular wall 24 of the first mould part 2 has a substantially octagonal perimeter and outline with alternating first recesses 24 to mate substantially complementarily first protrusions 80 of the interior circumferentially wall 81 of the first tool cavity 76 to assure that the first mould part 2 can be located in a correct position for the nozzles 49 to reach the overmould cavities 23 during injection of the overmoulding second component material.

First mounting holes 82 extend from the corners of the first support plate face 79 inside the first support plate 64 and serve to receive the guide bushings 62. A first circular locating recess 83 are provided in the first support plate face 79 to receive and mount the first locating ring 63 to mount and position the first support plate 64 in the injection moulding machine. As seen better in the sectional view of fig. 11c a first U-shaped tempering channel 84 traverses the first support plate 64 between a first inlet opening 86a at one edge and first outlet opening 86b at same edge due to cross bore 85.

The first mounting holes 82 may traverse the first support plate 64 to receive from the first insertable mould assembly face 78 also the guide pillars 68 that protrude from the corners holes 74 of the second support plate 65 to guide the first support plate 64 and the second support plate 65 together during closing the injection moulding tool 61. Alternatively, the first mounting holes 82 are blind and separate holes provide for receiving the locating ends of the guide pillars 68.

Fig. 12a shows the second support plate 65 in perspective seen from a second support plate face 88, and fig. 12b shows the second support plate 65 from the opposite second insertable mould assembly face 87 for securing the second support plate 65 to the upper section or platen of the injection moulding machine (not shown), which upper platen in the present embodiment is movable, but in other embodiments can be the stationary section or platen.

The second exterior annular wall 35 of the second mould part 3 is configured to be received inside the second tool cavity 75 so that the second free mould face 8 is accommodated inside said second tool cavity 75. The second exterior annular wall 35 of the second mould part 3 has a substantially circular perimeter and outline to mate along the interior circumferentially wall 90 of the second tool cavity 75 to assure that the second mould part 3 can be located in a correct position for the nozzles 49 to reach-through to the overmould cavities 23 during injection of the overmoulding second component material. The fact that the first exterior annular wall 24 is octagonal and the second exterior annular wall 35 is circular makes it impossible to arrange the insertable mould assembly 1 upside-down in the injection moulding tool 61. The spring plungers 66 engage via plunger holes 66a in the second tool cavity 75 of the second support plate 65 the insertable mould assembly 1 to push it away from the second support plate 65 when the support plates are parted.

A third tool cavity 91 are provided in the second support plate face 88 to receive the holder plate 67, which might be secured to the second support plate by means of screws (not shown) in screw holes 89. The optional spring plungers 66 act between the bottom face 92 of the third tool cavity 91 and the holder plate 67 for holding the nozzles 49 to push the insertable mould assembly 1 away from the second support plate upon opening of the injection moulding tool 61.

The third tool cavity 91 also accommodates means for distribution of liquid tempering medium to temper the nozzles during injection of the overmoulding second component material to achieve and maintain proper flow properties of the overmoulding second component material and preserve desired properties of this material as well as of any additive, including additives such as an Active Pharmaceutical Ingredient (API).

A liquid tempering medium, such as water, is supplied via exterior liquid tempering medium inlet 99a to annular omega-shaped second manifold 94 including a third tempering channel 99 recessed in the third tool cavity 91. The third tempering channel 99 has a liquid tempering medium inlet 96a in fluid communication with the third tempering channel 99. The liquid tempering medium circulates from the interior liquid tempering medium inlet 96a, provided in the edge of the second support plate 65, via nozzle tempering inlets 95a, 95b, 95c, 95d, 95e, 95f, 95g, 95h provided in series in the third tempering channel 99, into respective annular tempering jackets (not shown) of the respective injection nozzles (49a,49b,49c,49d,49e,49f,49g,49h not seen in fig. 12a) to temper the injection nozzles along their length. The liquid tempering medium exits the last injection nozzle in the series and the third tempering channel 99 via interior liquid tempering medium outlet 96b for finally also exiting the second support plate 65 via exterior liquid tempering medium outlet 99b. So the liquid tempering medium passes and tempers the injection nozzles 49a,49b,49c,49d,49e,49f,49g,49h in series. A circumferential seal (not shown) is nested in a circumferential groove 97 surrounding the third tempering channel 99 to prevent leakage of liquid tempering medium. The injection nozzles can either be heated or cooled, depending upon the type of injection moulding application in which they are used. Tempering of nozzles may take place via a suitable tempering jacket of a nozzle, which e.g. can be a threaded channel around the inner part of the nozzle. So by e.g. supplying a cold tempering medium, e.g. cold water, the nozzle can be kept cold, as needed for LSR and some silicones. Tempered nozzles, such as water-cooled nozzles, are known to the person skilled in the art and will not be described in further details.

In a preferred embodiment the insertable injection mould assembly 1 is in heated condition at a temperature of about 60°C when mounted to the injection moulding tool 61, the support plates 64,65 of which are also tempered as described herein. At injection the uncured overmoulding second component material with its content of Active Pharmaceutical Ingredient is injected via tempered, often cooled, nozzles into the at least one overmoulding cavities at a temperature of not higher than room temperature, even as low as about 10°C, to prevent pre-curing/setting and protect pharmaceutical activity of the API. So the liquid tempering medium and/or the second overmoulding second component material are at a common selected temperature by virtue of the tempered nozzles, whereas the support plates may be tempered to other or same temperature by means of separate tempering channels connected to other sources of tempering medium/media.

So as seen better in the sectional view of fig. 12c second tempering channels 98 traverse the second support plate 65 closest to the second insertable mould assembly face 87. The second support plate 65 is thicker than the first support plate 64, to accommodate extra tempering channels in form of third tempering channel 99 for tempering the injection nozzles.

Tempering medium is delivered to the second tempering channel 98 of the second support plate 65 via a second inlet opening 100a at one edge of the second support plate 65 and exits the second support plate 65 via a second outlet opening 100b at same edge. The second tempering channel 98 is substantially U-shaped with substantially parallel first and second legs 100a',100b' connected at the bottom by third leg 101.

The temperature of the tempering medium is circulating in the second tempering channel 98 of the second support plate 65 may have same or different temperature as the liquid tempering medium circulating in the third tempering channel 99. The tempering medium circulating in the first tempering channel 84 of the first support plate 64 can be at the same or different temperature as the tempering medium circulating in the second support plate 65, which tempering media may be the same or different.

The first and second tempering channels 84,98 serve the purpose of securing that the temperature of the insertable mould assembly is substantially constant and at a temperature that does not prolong cycle time, whereas the third tempering channels 99 control the temperature of the nozzles, and thus of the overmoulding second component material.

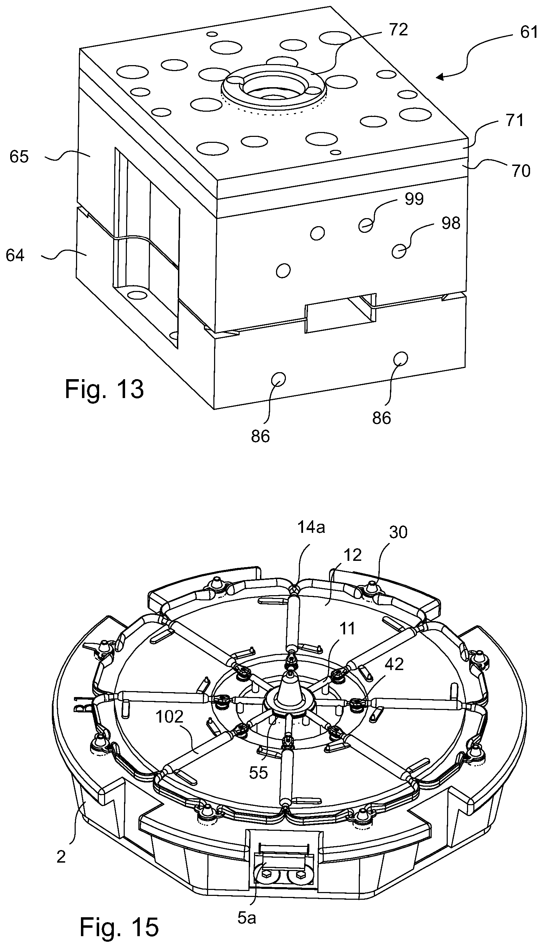

Fig. 13 shows in perspective the compact injection moulding tool 61 in closed condition and in it's vertical arrangement wherein steps a)- f) of the method have passed.

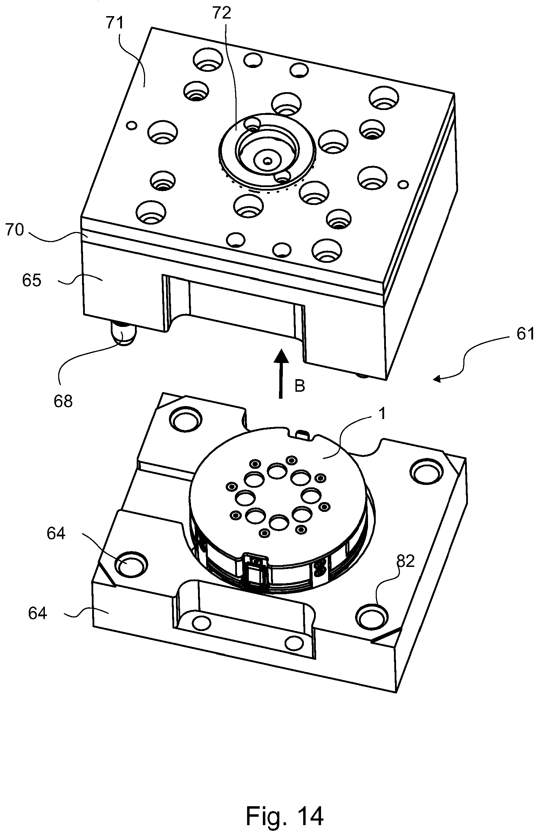

Fig. 14 shows in perspective the injection moulding tool 61 after injection and now in open condition with the insertable mould assembly 1 located in the first support plate 64, and the second support plate 65 lifted away from the first support plate 64, as indicated by arrow B. The insertable mould assembly 1 then proceeds through steps g) - j) of the method.

In the perspective view of fig. 15 the insertable mould assembly 1 has been opened and the second mould part 3 has been removed, as defined in step j). The pinwheel 11 on the second mould part 3 is seen in fig. 15 in enlarged scale view for clarity purposes, and dimensions do not reflect the dimensions of the mould assembly 1 seen in figs. 11, 12 and 13.

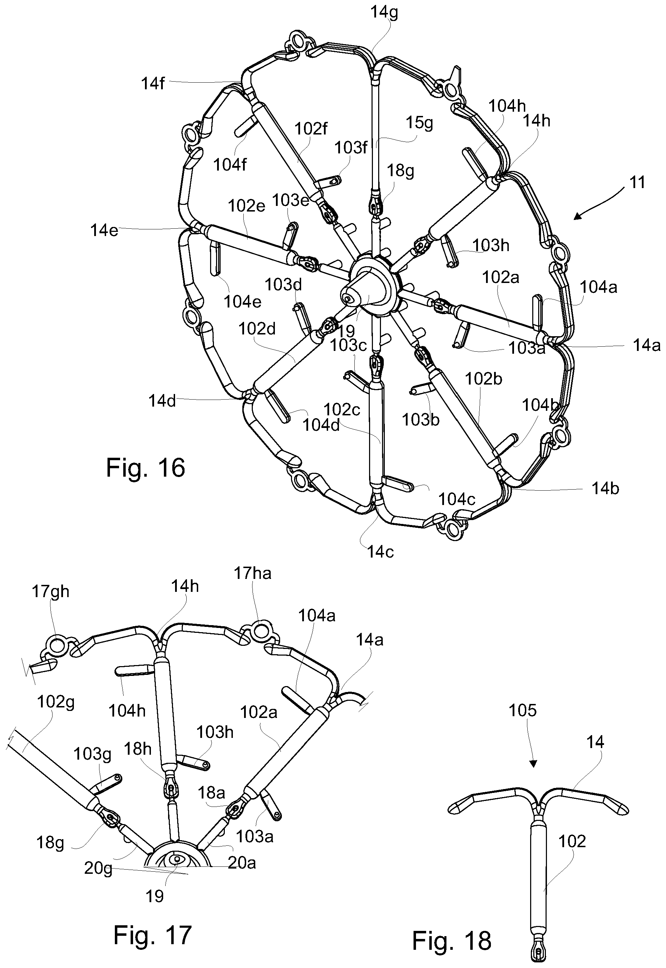

The pinwheel 11 rests, locked by the male guide parts 30,42,55 on the first mould cavity face 12 of the first mould part 2. The overmould components 102a,102b,102c,102d,102e,102f, 102g,102h, which have been made in overmoulding step f) by injecting overmoulding second component material in both the overmould cavities 23a,23b,23c,23d,23e,23f,23g,23h, the inlet sprue cavities 47a,47b,47c,47d,47e,47f,47g,47h and the outlet sprue cavities 48a,48b,48c,48d,48e,48f,48g,48h, are applied to the stems 15a,15b,15c,15d,15e,15f,15g,15h of the T-shaped blank objects 14a,14b,14c,14d,14e,14f,14g,14h. After sufficient curing of the overmould components 102a,102b,102c,102d,102e, 102f,102g the pinwheel 11 is taken out of the first mould part 2, as seen in fig. 16.

In the present case the T-shaped blank objects 14a,14b,14c,14d,14e,14f,14g,14h are IUDs. The heads 16a,16b,16c,16d,16e,16f,16g,16h of IUDs 14a,14b,14c,14d,14e, 14f,14g,14h are without overmould components 102a,102b,102c,102d,102e,102f,102g,102h. The IUD 14g is shown left without overmould component 102g to illustrate the difference before and after the overmoulding method of the substrate of the present invention, thus the difference between a blank object and an overmoulded object. This is however purely for illustrative purposes.

As shown in the fragmentary view of fig. 17 of the pinwheel 11 seen in fig. 16, the IUDs are interconnected by runners and sprues that protrude on several positions, some of which runners and sprues originate from the separate moulding of the pinwheel. The inlet sprue cavities 47a,47b,47c,47d,47e,47f, 47g,47h have however also added an inlet sprue 103a,103b,103c,103d,103e,103f,103g,103h, and the outlet sprue cavities 48a,48b,48c,48d,48e,48f,48g,48h has added an outlet sprue 104a,104b,104c,104d,104e,104f,104g,104h of overmoulding second component material to the overmould components 102a,102b,102c,102d,102e,102f,102g, to make sure that the overmould cavities 23a,23b,23c,23d,23e,23f,23g,23h are all completely filled up.

Any sprues and runners of the pinwheel, such as the first connector bodies 17ab,17bc,17cd,17de,17ef,17fg,17gh,17ha, the cone 19, and the second connector bodies 20a,20b,20c,20d,20e,20f,20g,20h, as well as the inlet sprue 103a,103b,103c,103d,103e,103f,103g,103h and the outlet sprue 104a,104b,104c,104d,104e,104f,104g,104h are broken off or cut off to obtain an IUD 105 with an overmould component 102a,102b,102c,102d,102e,102f,102g, e.g. a medicament reservoir 102a,102b,102c,102d,102e,102f,102g, as the final product 105, as seen in fig. 18. This final product 105 is the blank object 14 with an overmould component 102 to be used as the IUD. Preferably all sprues and runners are cut off in one and same process using a special cutting tool designed in accordance with the designs of the overmoulded substrate.

### Overmoulding example

The substrate is manufactured as a pinwheel of eight T-shaped IUDs of a thermoplastic first component material. The overmoulding second component is a mix with high viscosity that resembles a LSR (Liquid Silicone Rubber) consisting of low consistency silicone with an admixture of Levonorgestrel as an API (Active Pharmaceutical Ingredient) that do not withstand high temperature.

The uncured overmoulding second component material is in two parts (part A and part B) and does not cure until these are mixed together. In the example the silicone is of a three part condensation cure system with low viscosity to enable high amount of added API. Part A consists of silicone base, cross linker and API. Part B consists of silicone base, catalyst and API. The API was equally added to the two silicone parts (part A and B with mixing ratio of about 1:1). It is desired to have a high concentration of the API in the medicament reservoir so that the product (e.g. implant and IUD) is small (a small product is required to have good patient acceptances). In the example about 50% by weight of the mix is API, suspended as powder.

The mixing is done in a device that shakes the powder (API) into the fluid silicone. After mixing Part A with API and part B with API, these mixtures can rest for some days without sedimentation.

The silicone can be condensation cure, addition cure or any other curing system. It can be a 1-part system, 2-part system, 3-part system, or be a silicone system with more than 3 parts. Generally it is preferably to have a 2-part system due to the convenience. The mixing ratio is not exactly 1:1, even though 1:1 mixing ratio facilitates the mixing. In the present example a 3-part condensation cure silicone with low consistency was used. The low consistency facilitates addition of high amount of API powder without getting too high viscosity that would have negative characteristics for the mixing and filling. The 3-parts of silicone and the API was premixed with conventional means so that two parts of mixes were created. Both parts containing 50% API, one part contains the cross-linker and the other part containing the catalyst.

The mixing process of Part A and B with API content goes via a positive displacement system (dosing and pumping). Two tubes meet in a static mixer that blends Part A and B with respective API content together, and initiates onset of the curing process. Curing can take long time or it can go fast depending on temperature and the kind of silicone or LSR. The final overmoulding second component mixture (Part A + Part B + API) is kept cool from the beginning of mixing and in the overmoulding process. Deck plates serve as "cold decks" in the mould frame that keeps the mixed silicone cold. The temperature of the injection moulding tool are kept below or at 10°C. This low temperature keeps or slows down the silicone from vulcanizing. Because as soon as part A and part B are mixed vulcanizing starts and cannot be stopped. To slow down this process the temperature of the injection moulding system, thus the barrel and screw, is kept low, approximately 5-15°C is often sufficient. Lower than 10°C may cause condensation on the equipment, which can be prevented by isolating the cooled parts, but also increases the viscosity of the silicone. Higher temperature than 15°C can sometimes be preferred depending on the silicone, sometime as high as 40°C. The temperature is adjusted with tempering media. Heating above this low temperature will start unwanted curing in the injection barrel.

The overmoulding second component material thus obtained is injected via nozzles cooled to 10°C into the closed preheated mould assembly housing the pinwheel. The closed mould assembly is suspended to the injection moulding tool.

The method proceeds along the following cycle step by step:
- placing a substrate in form of a pinwheel inside an insertable mould assembly and conducting preheating,
- placing this preheated mould assembly that are kept closed with clamping mechanisms on the sides into the vertical injection moulding machine,
- closing the injection moulding tool,
- applying locking pressure,
- during an injection period of maximum 30 seconds injecting silicone mix via cooled nozzles that sits in the injection moulding tool,
- opening the injection moulding tool allowing the insertable mould assembly to sit in the first support plate, the lower platen,
- removing the insertable mould assembly from the first support plate,
- placing the insertable mould assembly on a conveyor belt of a conveyor oven in about 15 minutes,
- opening the clamping mechanism and allowing the second mould part to pop open due to springs that push the second mould part upwards and away from the first mould part,
- removing the overmoulded pinwheel,
- dividing the pinwheel into IUD,
- removing sprues and runners.

The overmoulding cavities may have a surface coating of Teflon (FEP) to repel the very sticky LSR or silicone, but other coatings may be suitable as well.

To summarize the cycle time of the insertable mould assembly in the injection moulding machine was less than 2 minutes using 7-12 insertable mould assemblies. The clamping mechanism was initially released and the insertable mould assembly transferred manually or by a robot to the oven for during a curing time of about 10 - 15 minutes. After curing, sprues and runners are cut off the medicament reservoir and the pinwheel resulting in 8 IUDs per insertable mould assembly. The IUDs had smooth edges with smooth transition between the IUD main body and the overmould component. Optionally a membrane is finally provided to further hold the medicament reservoir on the main body of the T-shaped individual blank object.

Not only has the IUD itself rounded corners and edges, the transitions to the overmould component are also smooth and the overmoulded IUD has no sharp edges or corners. The overmoulding method enables manufacturing of IUDs in any shape and placing the medicament reservoir as desired. The overmoulding method also facilitates placing the medicament reservoir on any desired position on an IUD.

Above the invention is described in relation to a vertical injection moulding machine where the injection unit is moveable vertically together with the upper section. Emphasis is made that other arrangements and positions of the injection unit is indeed possible within the scope of the present invention, such as side injection mould arrangements. For example a vertical injection moulding machine with horizontal injection unit or a horizontal injection moulding machine with a vertical injection unit would function excellent in the present invention. Even an injection unit positioned at other angle than substantially perpendicular, such as about 30°, is possible within the scope of the present invention.

## Claims

1. A substrate (10) of individual blank objects (14a,14b,14c,14d,14e,14f,14g,14h), the individual blank objects (14a,14b,14c,14d,14e,14f,14g,14h) are annular arranged and interconnected side-by-side to form a wheel (11) having a circumference and a common centre, wherein the individual blank objects (14a,14b,14c,14d,14e,14f,14g,14h) have male mounting parts and/or female mounting parts configured for mounting the substrate (10) in a mould assembly to be at least partly overmoulded, **characterised in that** at least a part of the individual blank object (14a,14b,14c,14d,14e,14f,14g,14h) has an overmoulding of an overmoulding second component material (102a,102b,102c,102d,102e,102f,102g) to provide a medicament reservoir on at least a part of the substrate (10).

2. A substrate (10) according to claim 1, **characterised in that** the male mounting parts and/or female mounting parts are sprues and runners from a separate, substrate-manufacturing process.

3. A substrate (10) according to claims 1 or 2, **characterised in that** the individual blank objects (14a,14b,14c,14d,14e,14f,14g,14h) are substantially T-shaped, wherein each individual T-shaped blank object has a stem (15a,15b,15c,15d,15e,15f,15g,15h) that terminates in a head (16a,16b,16c,16d,16e,16f,16g,16h) with two opposite arms radiating away from each other from the end of the stem (14a,14b,14c,14d,14e,14f,14g,14h).

4. A substrate (10) according to claim 3, **characterised in that** the two opposite arms of the two opposite heads (16a,16b,16c,16d,16e,16f,16g,16h) are arranged annularly in the wheel (11) adjacent each other so that the free arm ends are connected by first female mounting parts in form of first connector bodies (17ab,17bc,17cd,17de,17ef,17fg, 17gh,17ha) to create a circumference of the wheel (11).

5. A substrate (10) according to claims 3 or 4, **characterised in that** opposite the heads (16a,16b,16c,16d,16e,16f,16g, 16h) the T-shaped blank objects (14a,14b,14c,14d, 14e,14f,14g,14h) have free stem ends (18a,18b,18c,18d, 18e,18f,18g,18h) that via respective second connector bodies (20a,20b,20c,20d,20e,20f,20g,20h) are connected to a female mounting part in form of a common centre (19).

6. A substrate (10) according to claim 5, **characterised in that** the second connector bodies (20a,20b,20c,20d,20e,20f, 20g,20h) have spacer bodies (21a,21b,21c,21d,21e,21f,21g, 21h) with two axially protruding male mounting parts in form of pins (22a,22b,22c,22d,22e,22f,22g,22h) on each second connector body (20a,20b,20c,20d,20e,20f,20g,20h).

7. A substrate (10) according to any of the preceding claims, **characterised in that** the overmoulding second component material (102a,102b,102c,102d,102e,102f,102g) comprises an elastomer, preferably a silicone compound, more preferred a silicone compound with an admixture of a pharmaceutical medicament or pharmaceutical agent, such as an Active Pharmaceutical Ingredient, preferably the pharmaceutical medicament is or comprises a hormone, an antimicrobiological, or a combination of one or more of these.

8. A substrate (10) according to any of the preceding claim, **characterised in that** the overmoulding second component material 102a,102b,102c,102d,102e,102f,102g) comprises at least one or the agents or medicaments selected from the group comprising progesterone and its derivatives, cyproterone acetate, desogestrel, etonogestrel, levonorgestrel, lynestrenol, medroxyprogesterone acetate, norethisterone, norethisterone acetate, norgestimate, drospirenone, gestodene, 19-nor-17-hydroxy progesterone esters, 17α-ethinyltestosterone and derivatives thereof, 17α-ethinyl-19-nor-testosterone and derivatives thereof, ethynodiol diacetate, dydrogesterone, norethynodrel, nestoron, dydrogesterone, allylestrenol, medrogestone, norgestrienone, ethisterone and dl-norgestrel.

9. A substrate (10) according to any of the preceding claims, **characterised in that** the overmoulding second component material (102a,102b,102c,102d,102e,102f,102g) provides an inlet sprue (103a,103b,103c,103d,103e,103f, 103g,103h) and an outlet sprue (104a,104b,104c,104d,104e, 104f,104g,104h) to the overmoulded substrate (10).

10. A substrate (10) according to any of the preceding claims 1 - 9, **characterised in that** the number of individual blank objects (14a,14b,14c,14d,14e,14f,14g,14h) is at least one, preferably an even number, more preferably an even number between 2-64, between 4-32, between 8-16, preferably the number of blank objects is eight.

11. A substrate (10) according to any of the preceding claims 2 - 10, **characterised in that** the overmoulded substrate is divided into individual objects and any sprues and runners of the overmoulded wheel (11) are broken off or cut off.

12. A contraceptive, a hormone replacement therapy device, such as an intrauterine device, or an implant comprising the substrate according to any of the preceding claims 1 - 11.

13. An intrauterine device according to claim 12, wherein the transitions from the substrate (10) to the overmoulding second component (102a,102b,102c,102d,102e,102f,102g) are smooth, whereby the intrauterine device has no sharp edges or corners.

14. An intrauterine device according to claim 13 when dependent on claims 3 - 11, wherein a membrane is provided to hold the medicament reservoir on a main body of the T-shaped individual blank object.

## Patentansprüche

1. Substrat (10) aus einzelnen leeren Objekten (14a, 14b, 14c, 14d, 14e, 14f, 14g, 14h), wobei die einzelnen leeren Objekte (14a, 14b, 14c, 14d, 14e, 14f, 14g, 14h) ringförmig angeordnet sind und Seite an Seite miteinander verbunden sind, um ein Rad (11) zu bilden, das einen Umfang und eine gemeinsame Mitte aufweist,
wobei die einzelnen leeren Objekte (14a, 14b, 14c, 14d, 14e, 14f, 14g, 14h) männliche Montageteile und/oder weibliche Montageteile aufweisen, die zum Montieren des Substrats (10) in einer Formanordnung konfiguriert sind, um zumindest teilweise umspritzt zu werden,
**dadurch gekennzeichnet, dass** zumindest ein Teil des einzelnen leeren Objekts (14a, 14b, 14c, 14d, 14e, 14f, 14g, 14h) eine Umspritzung eines umspritzten zweiten Komponentenmaterials (102a, 102b, 102c, 102d, 102e, 102f, 102g) aufweist, um ein Medikamentenreservoir auf zumindest einem Teil des Substrats (10) bereitzustellen.

2. Substrat (10) nach Anspruch 1, **dadurch gekennzeichnet, dass** die männlichen Montageteile und/oder weiblichen Montageteile Angusse und Angusskanäle aus einem separaten Substratherstellungsprozess sind.

3. Substrat (10) nach Anspruch 1 oder 2, **dadurch gekennzeichnet, dass** die einzelnen leeren Objekte (14a, 14b, 14c, 14d, 14e, 14f, 14g, 14h) im Wesentlichen T-förmig sind, wobei jedes einzelne T-förmige leere Objekt einen Schaft (15a, 15b, 15c, 15d, 15e, 15f, 15g, 15h) aufweist, der in einem Kopf (16a, 16b, 16c, 16d, 16e, 16f, 16g, 16h) mit zwei gegenüberliegenden Armen endet, die sich von dem Ende des Schafts (14a, 14b, 14c, 14d, 14e, 14f, 14g, 14h) voneinander weg erstrecken.

4. Substrat (10) nach Anspruch 3, **dadurch gekennzeichnet, dass** die zwei gegenüberliegenden Arme der zwei gegenüberliegenden Köpfe (16a, 16b, 16c, 16d, 16e, 16f, 16g, 16h) ringförmig in dem Rad (11) benachbart zueinander angeordnet sind, so dass die freien Armenden durch erste weibliche Montageteile in Form von ersten Verbinderkörpern (17ab, 17bc, 17cd, 17de, 17ef, 17fg, 17gh, 17ha) verbunden sind, um einen Umfang des Rads (11) zu erzeugen.

5. Substrat (10) nach Anspruch 3 oder 4, **dadurch gekennzeichnet, dass** gegenüber den Köpfen (16a, 16b, 16c, 16d, 16e, 16f, 16g, 16h) die T-förmigen leeren Objekte (14a, 14b, 14c, 14d, 14e, 14f, 14g, 14h) freie Schaftenden (18a, 18b, 18c, 18d, 18e, 18f, 18g, 18h) aufweisen, die über jeweilige zweite Verbinderkörper (20a, 20b, 20c, 20d, 20e, 20f, 20g, 20h) mit einem weiblichen Montageteil in Form einer gemeinsamen Mitte (19) verbunden sind.

6. Substrat (10) nach Anspruch 5, **dadurch gekennzeichnet, dass** die zweiten Verbinderkörper (20a, 20b, 20c, 20d, 20e, 20f, 20g, 20h) Abstandskörper (21a, 21b, 21c, 21d, 21e, 21f, 21g, 21h) mit zwei axial vorstehenden männlichen Montageteilen in Form von Stiften (22a, 22b, 22c, 22d, 22e, 22f, 22g, 22h) an jedem zweiten Verbinderkörper (20a, 20b, 20c, 20d, 20e, 20f, 20g, 20h) aufweisen.

7. Substrat (10) nach einem der vorhergehenden Ansprüche, **dadurch gekennzeichnet, dass** das umspritzte zweite Komponentenmaterial (102a, 102b, 102c, 102d, 102e, 102f, 102g) ein Elastomer, vorzugsweise eine Silikonverbindung, bevorzugter eine Silikonverbindung mit einer Beimischung eines pharmazeutischen Medikaments oder pharmazeutischen Mittels, wie etwa eines pharmazeutischen Wirkstoffs, umfasst, wobei das pharmazeutische Medikament vorzugsweise ein Hormon, ein antimikrobiologisches Mittel oder eine Kombination von einem oder mehreren davon ist oder umfasst.

8. Substrat (10) nach einem der vorhergehenden Ansprüche, **dadurch gekennzeichnet, dass** das umspritzte zweite Komponentenmaterial (102a, 102b, 102c, 102d, 102e, 102f, 102g) zumindest eines oder die Mittel oder Medikamente umfasst, die aus der Gruppe ausgewählt sind, die Progesteron und seine Derivate, Cyproteronacetat, Desogestrel, Etonogestrel, Levonorgestrel, Lynestrenol, Medroxyprogesteronacetat, Norethisteron, Norethisteronacetat, Norgestimat, Drospirenon, Gestoden, 19-Nor-17-hydroxyprogesteronester, 17α-Ethinyltestosteron und Derivate davon, 17α-Ethinyl-19-nor-testosteron und Derivate davon, Ethynodioldiacetat, Dydrogesteron, Norethynodrel, Nestoron, Dydrogesteron, Allylestrenol, Medrogeston, Norgestrienon, Ethisteron und dl-Norgestrel umfasst.

9. Substrat (10) nach einem der vorhergehenden Ansprüche, **dadurch gekennzeichnet, dass** das umspritzte zweite Komponentenmaterial (102a, 102b, 102c, 102d, 102e, 102f, 102g) einen Einlassanguss (103a, 103b, 103c, 103d, 103e, 103f, 103g, 103h) und einen Auslassanguss (104a, 104b, 104c, 104d, 104e, 104f, 104g, 104h) zu dem umspritzten Substrat (10) bereitstellt.

10. Substrat (10) nach einem der vorhergehenden Ansprüche 1-9, **dadurch gekennzeichnet, dass** die Anzahl der einzelnen leeren Objekte (14a, 14b, 14c, 14d, 14e, 14f, 14g, 14h) zumindest eins ist, vorzugsweise eine gerade Zahl, bevorzugter eine gerade Zahl zwischen 2-64, zwischen 4-32, zwischen 8-16, wobei die Anzahl der leeren Objekte vorzugsweise acht ist.

11. Substrat (10) nach einem der vorhergehenden Ansprüche 2-10, **dadurch gekennzeichnet, dass** das umspritzte Substrat in einzelne Objekte unterteilt ist und jegliche Angusse und Angusskanäle des umspritzten Rads (11) abgebrochen oder abgeschnitten sind.

12. Empfängnisverhütungsmittel, Hormonersatztherapievorrichtung, wie etwa eine Intrauterinvorrichtung, oder Implantat, umfassend das Substrat nach einem der vorhergehenden Ansprüche 1-11.

13. Intrauterinvorrichtung nach Anspruch 12, wobei die Übergänge vom Substrat (10) zur umspritzten zweiten Komponente (102a, 102b, 102c, 102d, 102e, 102f, 102g) glatt sind, wodurch die Intrauterinvorrichtung keine scharfen Kanten oder Ecken aufweist.

14. Intrauterinvorrichtung nach Anspruch 13, wenn abhängig von den Ansprüchen 3-11, wobei eine Membran bereitgestellt ist, um das Medikamentenreservoir auf einem Hauptkörper des T-förmigen einzelnen leeren Objekts zu halten.

## Revendications

1. Un substrat (10) d'objets vierges individuels (14a, 14b, 14c, 14d, 14e, 14f, 14g, 14h), les objets vierges individuels (14a, 14b, 14c, 14d, 14e, 14f, 14g, 14h) sont disposés en anneau et interconnectés côte à côte pour former une roue (11) ayant une circonférence et un centre commun, dans lequel les objets vierges individuels (14a, 14b, 14c, 14d, 14e, 14f, 14g, 14h) ont des parties de montage mâles et/ou des parties de montage femelles configurées pour être montés sur le substrat (10) dans un ensemble de moules pour être au moins partiellement surmoulé, **caractérisé en ce qu'**au moins une partie de l'objet vierge individuel (14a, 14b, 14c, 14d, 14e, 14f, 14g, 14h) a un surmoulage d'un matériau de deuxième composant de surmoulage (102a, 102b, 102c, 102d, 102e, 102f, 102g) pour fournir un réservoir de médicament sur au moins une partie du substrat (10).

2. Un substrat (10) selon la revendication 1, **caractérisé en ce que** les parties de montage mâles et/ou les parties de montage femelles sont des carottes et des canaux d'un processus de fabrication de substrat séparé.

3. Un substrat (10) selon les revendications 1 ou 2, **caractérisé en ce que** les objets vierges individuels (14a, 14b, 14c, 14d, 14e, 14f, 14g, 14h) sont sensiblement en forme de T, chaque objet vierge en forme de T ayant une tige (15a, 15b, 15c, 15d, 15e, 15f, 15g, 15h) qui se termine par une tête (16a, 16b, 16c, 16d, 16e, 16f, 16g, 16h) avec deux bras opposés s'éloignant l'un de l'autre à partir de l'extrémité de la tige (14a, 14b, 14c, 14d, 14e, 14f, 14g, 14h).

4. Un substrat (10) selon la revendication 3, **caractérisé en ce que** les deux bras opposés des deux têtes opposées (16a, 16b, 16c, 16d, 16e, 16f, 16g, 16h) sont disposés en anneau dans la roue (11) adjacents les uns aux autres de sorte que les extrémités libres des bras sont connectées par des premières parties de montage femelles sous forme de premiers corps de connecteurs (17ab, 17bc, 17cd, 17de, 17ef, 17fg, 17gh, 17ha) pour créer une circonférence de la roue (11).

5. Un substrat (10) selon les revendications 3 ou 4, **caractérisé en ce qu'**en face des têtes (16a, 16b, 16c, 16d, 16e, 16f, 16g, 16h), les objets vierges en forme de T (14a, 14b, 14c, 14d, 14e, 14f, 14g, 14h) ont des extrémités libres de tige (18a, 18b, 18c, 18d, 18e, 18f, 18g, 18h) qui, via des corps de connecteurs respectifs (20a, 20b, 20c, 20d, 20e, 20f, 20g, 20h), sont connectées à une partie de montage femelle sous forme d'un centre commun (19).

6. Un substrat (10) selon la revendication 5, **caractérisé en ce que** les corps de connecteurs (20a, 20b, 20c, 20d, 20e, 20f, 20g, 20h) ont des corps d'espacement (21a, 21b, 21c, 21d, 21e, 21f, 21g, 21h) avec deux parties de montage mâles axiales saillantes sous forme de broches (22a, 22b, 22c, 22d, 22e, 22f, 22g, 22h) sur chaque corps de connecteur (20a, 20b, 20c, 20d, 20e, 20f, 20g, 20h).

7. Un substrat (10) selon l'une quelconque des revendications précédentes, **caractérisé en ce que** le matériau de deuxième composant de surmoulage (102a, 102b, 102c, 102d, 102e, 102f, 102g) comprend un élastomère, de préférence un composé de silicone, plus préféré un composé de silicone avec un mélange d'un médicament pharmaceutique ou d'un agent pharmaceutique, tel qu'un ingrédient pharmaceutique actif, de préférence le médicament pharmaceutique est ou comprend une hormone, un antimicrobien, ou une combinaison de l'un ou plusieurs de ceux-ci.

8. Un substrat (10) selon l'une quelconque des revendications précédentes, **caractérisé en ce que** le matériau de deuxième composant de surmoulage (102a, 102b, 102c, 102d, 102e, 102f, 102g) comprend au moins un des agents ou médicaments sélectionnés dans le groupe comprenant la progestérone et ses dérivés, l'acétate de cyprotérone, le désogestrel, l'étonogestrel, le lévonorgestrel, le lynestrénol, l'acétate de médroxyprogestérone, la noréthistérone, l'acétate de noréthistérone, le norgestimate, la drospirénone, le gestodène, les esters de 19-nor-17-hydroxy progestérone, la 17α-éthiny1testostérone et ses dérivés, la 17α-éthiny1-19-nor-testostérone et ses dérivés, l'acétate d'éthynodiol, le dihydrogesterone, la noréthynodrel, le nestoron, le dihydrogesterone, l'allylestrenol, le médrogestone, le norgestrienone, l'éthistérone et le dl-norgestrel.

9. Un substrat (10) selon l'une quelconque des revendications précédentes, **caractérisé en ce que** le matériau de deuxième composant de surmoulage (102a, 102b, 102c, 102d, 102e, 102f, 102g) fournit une carotte d'entrée (103a, 103b, 103c, 103d, 103e, 103f, 103g, 103h) et une carotte de sortie (104a, 104b, 104c, 104d, 104e, 104f, 104g, 104h) au substrat surmoulé (10).

10. Un substrat (10) selon l'une quelconque des revendications précédentes 1-9, **caractérisé en ce que** le nombre d'objets vierges individuels (14a, 14b, 14c, 14d, 14e, 14f, 14g, 14h) est d'au moins un, de préférence un nombre pair, plus préféré un nombre pair entre 2-64, entre 4-32, entre 8-16, de préférence le nombre d'objets vierges est de huit.

11. Un substrat (10) selon l'une quelconque des revendications précédentes 2-10, **caractérisé en ce que** le substrat surmoulé est divisé en objets individuels et que toutes les carottes et canaux de la roue surmoulée (11) sont cassés ou coupés.

12. Un contraceptif, un dispositif de thérapie de remplacement hormonal, tel qu'un dispositif intra-utérin, ou un implant comprenant le substrat selon l'une quelconque des revendications précédentes 1-11.

13. Un dispositif intra-utérin selon la revendication 12, dans lequel les transitions du substrat (10) au deuxième composant de surmoulage (102a, 102b, 102c, 102d, 102e, 102f, 102g) sont lisses, de sorte que le dispositif intra-utérin n'a pas de bords ou de coins tranchants.

14. Un dispositif intra-utérin selon la revendication 13 dépendant des
revendications 3-11, dans lequel une membrane est prévue pour maintenir le réservoir de médicament sur un corps principal de l'objet vierge individuel en forme de T.
